# EUROPEAN PATENT APPLICATION

(11) **EP 4 734 639 A1**
(43) Date of publication of application: **29.04.2026**
(21) Application number: 23941924.5
(22) Date of filing: 21.06.2023
(51) Int. Cl.: H04W 72/21

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN)
(74) Representative: RGTH
(86) International application number: PCT/CN2023/101618
(87) International publication number: WO 2024/259620

(57) **Abstract**

A wireless communication method, a terminal device, and a network device. The method comprises: a terminal device reports a terminal device capability to a network device; and the terminal device receives n transmission parameter sets indicated by the network device, wherein the n transmission parameter sets are used for n uplink transmissions of the terminal device, n is a positive integer, and each transmission parameter sets comprise one or more combinations of the following parameters: a sounding reference signal (SRS) resource set index, an SRS resource index, the number of SRS resources, the maximum number of SRS ports, and the maximum number of transmission layers corresponding to the SRS resource set index.

## Description

### TECHNICAL FIELD

Embodiments of the present disclosure relate to the field of communications, and in particular, to wireless communication methods, terminal devices, and network devices.

### BACKGROUND

In the related art, an uplink transmission solution using multiple transmission reception points (TRPs)/antenna panels may only support that a terminal device capability associated with each panel of a terminal device is the same.

In some scenarios, it is considered to support that terminal device capabilities associated with different panels deployed on the terminal device are different. In this case, how to configure transmission parameters to ensure transmission performance is an urgent problem to be solved.

### SUMMARY

The present disclosure provides wireless communication methods, terminal devices and network devices, which are conducive to ensuring uplink transmission performance of the terminal device.

In a first aspect, a wireless communication method is provided, which includes: reporting, by a terminal device, terminal device capabilities to a network device; and receiving, by the terminal device, n transmission parameter sets indicated by the network device, where the n transmission parameter sets are used for n uplink transmissions of the terminal device, n being a positive integer, and a transmission parameter set includes a combination of one or more of the following parameters: a sounding reference signal (SRS) resource set index, an SRS resource index, a number of SRS resources, a maximum number of SRS ports, or a maximum number of transmission layers corresponding to the SRS resource set index.

In a second aspect, a wireless communication method is provided, which includes: receiving, by a network device, terminal device capabilities reported by a terminal device; and indicating n transmission parameter sets to the terminal device, where the n transmission parameter sets are used for n uplink transmissions of the terminal device, n being a positive integer, and a transmission parameter set includes a combination of one or more of the following parameters: a sounding reference signal (SRS) resource set index, an SRS resource index, a number of SRS resources, a maximum number of SRS ports, or a maximum number of transmission layers corresponding to the SRS resource set index.

In a third aspect, a terminal device is provided, which is configured to perform the method in the above first aspect or various implementations of the first aspect.

Specifically, the terminal device includes a functional module configured to perform the method in the above first aspect or various implementations of the first aspect.

In a fourth aspect, a network device is provided, which is configured to perform the method in the above second aspect or various implementations of the second aspect.

Specifically, the network device includes a functional module configured to perform the method in the above second aspect or various implementations of the second aspect.

In a fifth aspect, a terminal device is provided, which includes a processor and a memory. The memory is configured to store a computer program, and the processor is configured to call the computer program stored in the memory and run the computer program, to perform the method in the above first aspect or various implementations of the first aspect.

In a sixth aspect, a network device is provided, which includes a processor and a memory. The memory is configured to store a computer program, and the processor is configured to call the computer program stored in the memory and run the computer program, to perform the method in the above second aspect or various implementations of the second aspect.

In a seventh aspect, a chip is provided, which is configured to implement the method in any one of the first aspect to the second aspect or various implementations of the first aspect to the second aspect. Specifically, the chip includes: a processor, configured to call a computer program from a memory and run the computer program, to enable a device equipped with the chip to perform the method according to any one of the first aspect to the second aspect or various implementations of the first aspect to the second aspect.

In an eighth aspect, a computer-readable storage medium is provided, which is configured to store a computer program, the computer program enables a computer to perform the method according to any one of the first aspect to the second aspect or various implementations of the first aspect to the second aspect.

In a ninth aspect, a computer program product is provided, which includes computer program instructions, the computer program instructions enable a computer to perform the method according to any one of the first aspect to the second aspect or various implementations of the first aspect to the second aspect.

In a tenth aspect, a computer program is provided, and the computer program, when executed on a computer, enables the computer to perform the method according to any one of the first aspect to the second aspect or various implementations of the first aspect to the second aspect.

Through the above technical solutions, the terminal device can report the terminal device capabilities supported by the n uplink transmissions of the terminal device to the network device. Furthermore, the network device indicates n transmission parameter sets used for the n uplink transmissions, where the n transmission parameter sets are in one-to-one correspondence with the n uplink transmissions, that is, the network device can configure each uplink transmission with a respective transmission parameter set. In a case where panels with asymmetric capabilities are deployed on the terminal device side, flexibility of panel switching is improved. In addition, by configuring each uplink transmission with a respective transmission parameter set, it is conducive to ensuring performance of each uplink transmission of the n uplink transmissions.

### BRIEF DESCRIPTION OF THE DRAWINGS

FIG. 1 is a schematic diagram of a communication system architecture provided in embodiments of the present disclosure.
FIG. 2 illustrates a TDM transmission solution for a PUSCH of multiple TRPs.
FIG. 3 illustrates an SDM transmission solution for a PUSCH of multiple TRPs.
FIG. 4 illustrates an SFN transmission solution for a PUSCH of multiple TRPs.
FIGS. 5 to 7 are schematic diagrams of three panels with different capabilities deployed on a terminal device side.
FIG. 8 is a schematic interactive diagram of a wireless communication method provided in embodiments of the present disclosure.
FIG. 9 is a schematic diagram of an application scenario in embodiments of the present disclosure.
FIG. 10 is a schematic interactive diagram of a manner of indicating a transmission parameter set provided in embodiments of the present disclosure.
FIG. 11 is a schematic interactive diagram of another manner of indicating a transmission parameter set provided in embodiments of the present disclosure.
FIG. 12 is a schematic diagram of a manner of using a transmission parameter set provided in embodiments of the present disclosure.
FIG. 13 is a schematic block diagram of a terminal device provided in embodiments of the present disclosure.
FIG. 14 is a schematic block diagram of a network device provided in embodiments of the present disclosure.
FIG. 15 is a schematic block diagram of a communication device provided in embodiments of the present disclosure.
FIG. 16 is a schematic block diagram of a chip provided in embodiments of the present disclosure.
FIG. 17 is a schematic block diagram of a communication system provided in embodiments of the present disclosure.

### DETAILED DESCRIPTION

Technical solutions in embodiments of the present disclosure will be described below with reference to drawings of the embodiments of the present disclosure. However, the described embodiments are some but not all of the embodiments of the present disclosure. All other embodiments obtained by those ordinary skilled in the art based on the embodiments of the present disclosure without creative efforts shall fall within the protection scope of the present disclosure.

The technical solutions of the embodiments of the present disclosure may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, or other communication systems.

Generally, conventional communication systems support a limited number of connections which are easy to be implemented. However, with development of the communication technology, mobile communication systems will support not only the conventional communication, but also, for example, device to device (D2D) communication, machine to machine (M2M) communication, machine type communication (MTC), vehicle to vehicle (V2V) communication, vehicle to everything (V2X) communication or the like. The embodiments of the present disclosure may also be applied to these communication systems.

Optionally, a communication system in the embodiments of the present disclosure may be applied to a carrier aggregation (CA) scenario, or may be applied to a dual connectivity (DC) scenario, or may be applied to a standalone (SA) network deployment scenario.

Optionally, the communication system in the embodiments of the present disclosure may be applied to an unlicensed spectrum, where the unlicensed spectrum may also be considered as a shared spectrum; alternatively, the communication system in the embodiments of the present disclosure may be applied to a licensed spectrum, where the licensed spectrum may also be considered as an unshared spectrum.

In the embodiments of the present disclosure, various embodiments will be described with respect to a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STA) in a WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present disclosure, the terminal device may be deployed on land, including indoor or outdoor environments, in forms such as handheld, wearable, or in-vehicle; or the terminal device may be deployed on water (e.g., on a steamship); or the terminal device may be deployed in the air (e.g., on an airplane, a balloon, or a satellite).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present disclosure, the terminal device may also be a wearable device. The wearable device may also be referred to as a wearable smart device, which is a generic term for devices capable of being worn, into which the daily wear is intelligently designed and developed by applying wearable technologies, such as glasses, gloves, watches, clothing, and shoes. The wearable device is a portable device that is worn directly on a body, or integrated into a user's clothing or accessories. The wearable device is not only a hardware device, but also achieves powerful functions through software supporting, data interaction and cloud interaction. Generalized wearable smart devices includes: full-featured and large-sized devices that may implement full or partial functionality without relying on smart phones, for example, a smart watch or smart glasses; and devices that focus on a certain type of disclosure functionality only and need to be used in conjunction with other devices (such as smart phones), for example, various smart bracelets or smart jewelries for monitoring physical signs.

In the embodiments of the present disclosure, the network device may be a device used for communicating with a mobile device. The network device may be an access point (AP) in a WLAN or a base station such as a base transceiver station (BTS) in a GSM or CDMA, or may be a base station such as a NodeB (NB) in a WCDMA, or may also be an evolutional base station such as an evolutional Node B (eNB or eNodeB) in an LTE, a relay station or an access point, an in-vehicle device, a wearable device, a network device in an NR network, a network device in a future evolved PLMN network, a network device in a NTN network, or the like.

As an example but not a limitation, in the embodiments of the present disclosure, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station provided on land, water, and other places.

In the embodiments of the present disclosure, the network device may provide services for a cell, and the terminal device communicates with the network device through transmission resources (e.g., frequency domain resources, or frequency spectrum resources) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have characteristics of small coverage range and low transmit power, which are applicable for providing a data transmission service with high speed.

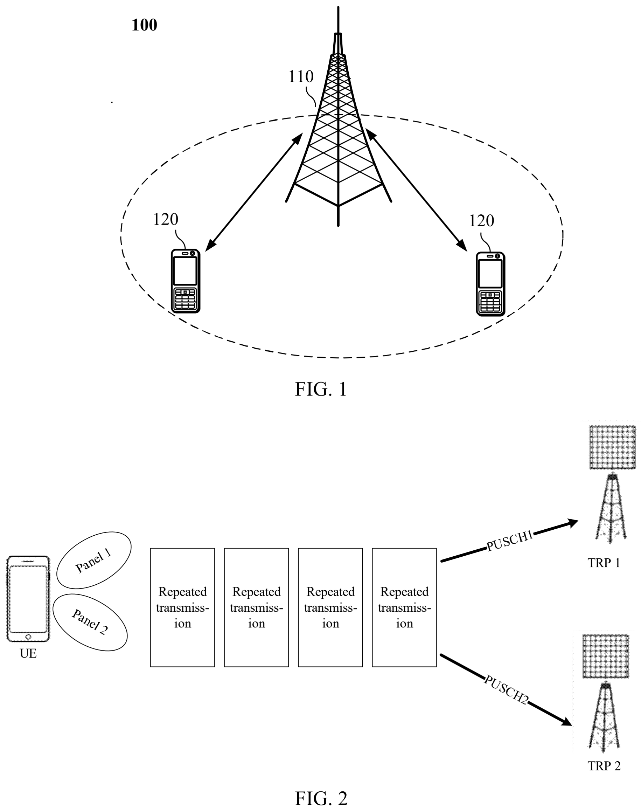

For example, a communication system 100 applied by the embodiments of the present disclosure is illustrated in FIG. 1. The communication system 100 may include a network device 110, and the network device 110 may be a device communicating with a terminal device 120 (also referred to as a communication terminal or a terminal). The network device 110 may provide communication coverage for a specific geographical area, and may communicate with terminal device(s) located within the coverage area.

FIG. 1 exemplarily illustrates one network device and two terminal devices. Optionally, the communication system 100 may include multiple network devices, and there may be another number of terminal devices within a coverage of each network device, which will not be limited in the embodiments of the present disclosure.

Optionally, the communication system 100 may further include other network entities such as a network controller and a mobility management entity, which will not be limited in the embodiments of the present disclosure.

It should be understood that, in the embodiments of the present disclosure, a device having a communication function in a network/system may be referred to as a communication device. Considering the communication system 100 illustrated in FIG. 1 as an example, communication devices may include the network device 110 and the terminal devices 120 that have communication functions. The network device 110 and the terminal devices 120 may be the specific devices described above, which will not be repeated here. The communication device may further include other devices in the communication system 100, such as a network controller, a mobility management entity, and other network entities, which will not be limited in the embodiments of the present disclosure.

It should be understood that, the terms "system" and "network" are often used interchangeably herein. The term "and/or" herein is only an association relationship to describe associated objects, meaning that there may be three relationships between associated objects. For example, "A and/or B" may represent three cases: A exists alone, both A and B exist, and B exists alone. In addition, a character "/" herein generally means that related objects before and after this character are in an "or" relationship.

It should be understood that, the term "indicate" mentioned in the embodiments of the present disclosure may mean a direct indication or an indirect indication, or may represent that there is an association relationship. For example, A indicates B, which may mean that A directly indicates B (for example, B may be obtained by A); or it may mean that A indirectly indicates B (for example, A indicates C, and B may be obtained by C); or it may mean that there is an association relationship between A and B.

In the description of the embodiments of the present disclosure, the term "correspond" may mean that there is a direct correspondence or indirect correspondence between two, or it may mean that there is an associated relationship between the two, or it may mean a relationship of indicating and being indicated or a relationship of configuring and being configured, or the like.

In the embodiments of the present disclosure, the term "predefined" may be implemented by pre-storing corresponding codes, tables or other manners used for indicating related information in a device (e.g., including a terminal device and network device), and its specific implementation is not limited in the present disclosure. For example, being predefined may refer to being defined in a protocol.

In the embodiments of the present disclosure, the "protocol" may refer to a standard protocol in the field of communications, for example, it may include an LTE protocol, an NR protocol, and related protocols applied in future communication systems, which will not be limited in the disclosure.

To facilitate understanding of the technical solutions of the embodiments of the present disclosure, a physical uplink shared channel (PUSCH) transmission solution of multiple transmission reception points (TRPs) related to the present disclosure will be described.

Non-coherent transmissions of downlink and uplink based on multiple TRPs are introduced in the NR system. Backhaul connection between TRPs may be ideal or non-ideal, where in an ideal backhaul, TRPs may perform quick and dynamic information exchange, and in a non-ideal backhaul, TRPs may only perform quasi-static information exchange due to a large delay. In the downlink non-coherent transmission, multiple TRPs may use different control channels to independently schedule multiple PDSCH transmissions of a terminal, or may use the same control channel to schedule transmissions of different TRPs, where data of different TRPs use different transmission layers, and the latter may only be used for the ideal backhaul.

In some scenarios, the UE may transmit the PUSCH to two TRPs in a time-division multiplexing (TDM) manner.

In some scenarios, the network device may schedule the terminal device to transmit the PUSCH to two TRPs by single downlink control information (DCI). The PUSCH transmitted to the two TRPs may be configured with independent transmission parameters, such as beam and precoding matrix, but the number of transmission layers of the PUSCH transmitted to the two TRPs is constrained to be the same. The terminal device aligns the PUSCH transmitted to different TRPs with corresponding TRPs to perform analog beamforming, thereby distinguishing different PUSCHs through spatial domains and improving uplink spectrum efficiency.

For the codebook-based PUSCH transmission, the single DCI needs to include two sounding reference signal (SRS) resource indicator (SRS resource indicator, SRI) fields and two precoding information and transmission layer number fields. A first precoding information and transmission layer number field is used for indicating precoding information and number of transmission layers of the PUSCH transmitted to TRP1. The number of transmission layers of the PUSCH transmitted to TRP2 is the same as the number of transmission layers indicated by the first precoding information and transmission layer number field. A first SRI field is used for indicating a beam direction of the PUSCH transmitted to TRP1, and a second SRI field is used for indicating a beam direction of the PUSCH transmitted to TRP2. The network device configures 2 SRS resource sets, and the first SRI field and the second SRI field correspond to 2 SRS resource sets respectively, which are used for indicating beam directions of PUSCHs transmitted to the two TRPs. A second precoding information and layer number field only needs to indicate precoding information, and the number of transmission layers defaults to the same as the number of transmission layers indicated by the first precoding information and layer number field.

For the non-codebook-based PUSCH transmission, the single DCI needs to include two SRI fields, where a first SRI field is used for indicating a beam direction and number of transmission layers of the PUSCH transmitted to TRP1, and a second SRI field is used for indicating a beam direction of the PUSCH transmitted to TRP2. The number of transmission layers of the PUSCH transmitted to TRP2 is the same as the number of transmission layers indicated by the first SRI.

In some other scenarios, the network device may schedule the terminal device to transmit PUSCHs to two TRPs by multiple DCIs, and the multiple DCIs may be carried by different control resource sets (CORESETs). The network device is configured with multiple CORESET groups, and each TRP is scheduled using CORESETs in a respective CORESET group. That is, different TRPs may be distinguished by CORESET groups. For example, the network device may configure one CORESET group index for each CORESET, and different indexes correspond to different TRPs.

In a case where a transmission solution of the PUSCH of multiple TRPs is a TDM solution, FIG. 2 illustrates a TDM solution, taking slot-based TDM repeated transmission as an example, which meets the following characteristics.

Repetition type A (i.e., a slot-based PUSCH): two groups of PUSCHs (using the same or different redundancy versions (RVs)) are transmitted at the same symbol position in K consecutive slots. Each group of PUSCHs is associated with an SRS resource set and a transmission configuration indicator (TCI) state.

Repetition type B (i.e., a mini-slot-based PUSCH): two groups of PUSCHs (using the same or different RVs) are transmitted on K nominal transmission opportunities. Each group of PUSCHs is associated with an SRS resource set and a TCI state.

To facilitate understanding of the technical solutions of the embodiments of the present disclosure, solutions of uplink multi-antenna panel/TRP transmission related to the present disclosure will be described.

In some scenarios, solutions supported by the uplink multi-panel/TRP transmission include a spatialdivision multiplexing (SDM) transmission solution, a single frequency network (SFN) transmission solution, and a TDM transmission solution.

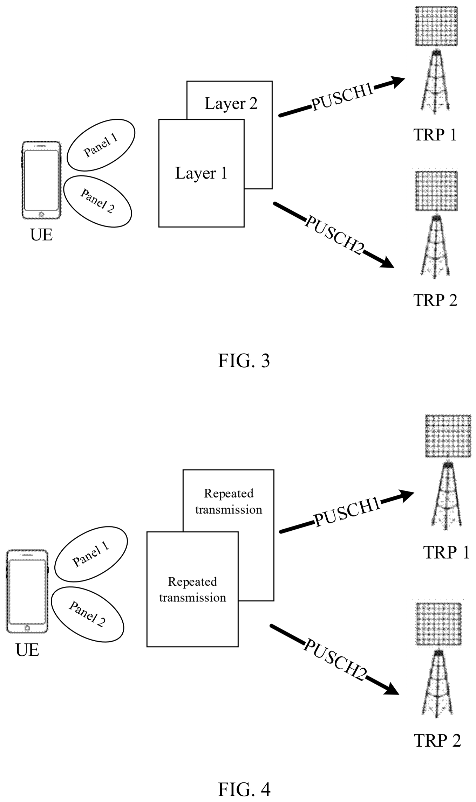

FIG. 3 is a schematic diagram of an SDM transmission solution. The SDM transmission solution meets the following characteristics.

Different transmission layers of one PUSCH are transmitted to different TRPs through different panels of the UE. Uplink resources occupied by different transmission layers are the same, SRS resource sets associated with different transmission layers are different, and TCI states associated with different transmission layers are different.

FIG. 4 is a schematic diagram of an SFN transmission solution. The SFN transmission solution meets the following characteristics.

Repeated transmissions of one PUSCH (e.g., including PUSCH1 and PUSCH2) are transmitted to different TRPs through different panels of the UE. PUSCH1 and PUSCH2 occupy the same uplink resources but have different associated SRS resource sets and different TCI states.

In the related art, for the solution of multi-panel/TRP transmission, only each panel deployed on the terminal device side can be associated with the same terminal device capability. For example, the SRS resource set associated with each panel is associated with the same configuration as follows:
the number of SRS resources in the SRS resource set;
the number of ports for SRS resources indicated by the network device; and
the maximum number of transmission layers associated with the SRS resource set.

Specifically, the number of SRS resources in the SRS resource set, the number of SRS resource ports, and the maximum number of transmission layers associated with each SRS resource set are all configured by radio resource control (RRC) signaling and are configured to the same value.

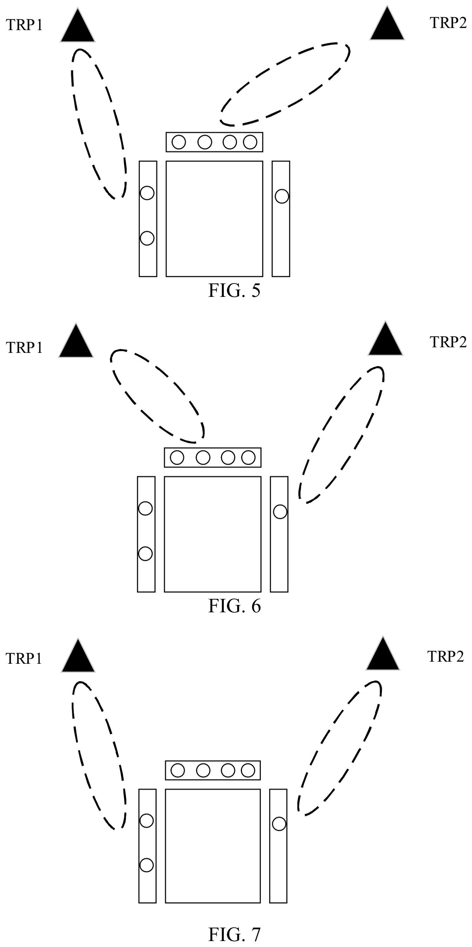

In some scenarios, it is considered to support that different panels deployed on the terminal device side correspond to different terminal device capabilities, for example, different numbers of associated SRS ports. As illustrated in FIGS. 5 to 7, three panels are deployed on the terminal device side; terminal device capabilities associated with all panels are different; and the numbers of SRS ports associated with all panels are different, which are 1 port, 2 ports, and 4 ports respectively. In this case, it may be considered that the terminal device capabilities associated with the panels are asymmetric. Therefore, how to configure transmission parameters (e.g., in a case of dynamically switching between panels used for transmitting uplink transmissions and receiving downlink transmissions) to ensure transmission performance is an urgent problem to be solved.

To facilitate understanding of the technical solutions of the embodiments of the present disclosure, the technical solutions of the present disclosure will be described in detail below through specific embodiments. The related art described above may be arbitrarily combined with the technical solutions of the embodiments of the present disclosure as optional solutions, which all fall within the protection scope of the embodiments of the present disclosure. The embodiments of the present disclosure include at least part of the following contents.

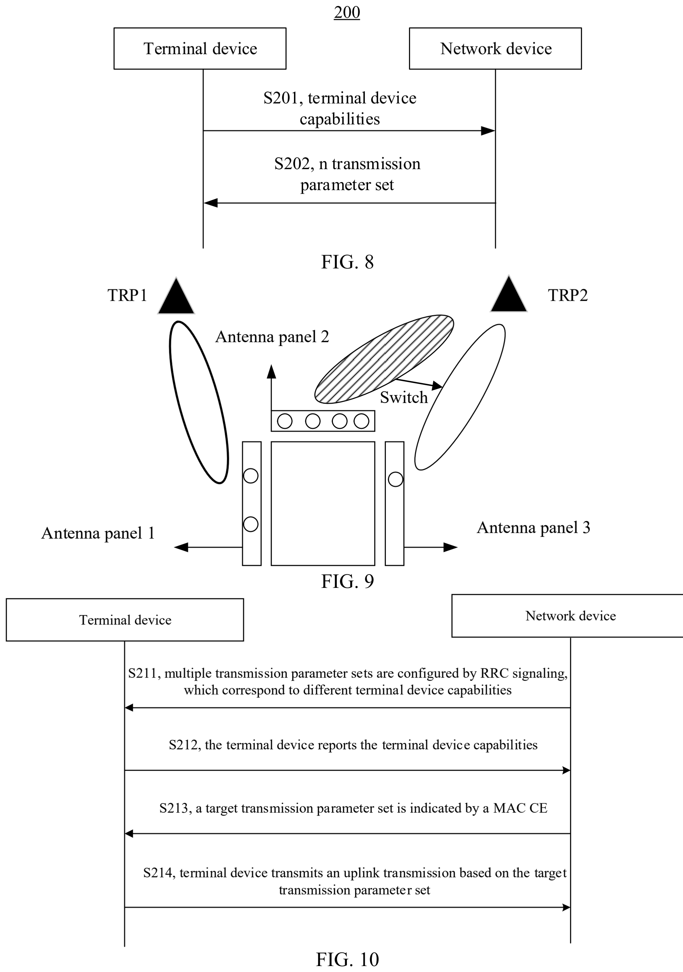

FIG. 8 is a schematic interactive diagram of a wireless communication method 200 according to embodiments of the present disclosure. As illustrated in FIG. 8, the method 200 includes at least part of the following contents.

In S201, a terminal device reports terminal device capabilities to a network device.

In S202, the terminal device receives n transmission parameter sets indicated by the network device, where n is a positive integer.

In some embodiments, n uplink transmissions may be PUSCH transmissions, or may be other uplink transmissions, such as PUCCH transmissions, which will not be limited in the present disclosure.

In some embodiments, the n transmission parameter sets are used for the n uplink transmissions of the terminal device.

For example, one transmission parameter set among the n transmission parameter sets is used for one uplink transmission among the n uplink transmissions. That is, the n transmission parameter sets are in one-to-one correspondence with the n uplink transmissions.

In some embodiments, the transmission parameter set includes a combination of one or more of following parameters:
an SRS resource set index, an SRS resource index, a number of SRS resources, a maximum number of SRS ports, or a maximum number of transmission layers corresponding to the SRS resource set index.

In a specific embodiment, one transmission parameter set includes the following parameters:
one SRS resource set index and the maximum number of transmission layers.

In another specific embodiment, one transmission parameter set includes the following parameters:
one SRS resource set index, the maximum number of transmission layers, and the maximum number of SRS ports.

In yet another specific embodiment, one transmission parameter set includes the following parameters:
one SRS resource set index, the maximum number of transmission layers, the SRS resource index, the number of SRS resources, and the maximum number of SRS ports.

In some embodiments, the SRS resource set index is a periodic SRS resource set index, a semi-persistent SRS resource set index, or an aperiodic SRS resource set index.

In some embodiments, the SRS resource index is used for indicating SRS resources included in the SRS resource set indicated by the SRS resource set index.

In some embodiments, the number of SRS resources is used for indicating the number of SRS resources included in the SRS resource set indicated by the SRS resource set index.

In some embodiments, the maximum number of SRS ports is used for indicating the maximum number of ports corresponding to the SRS resources included in the SRS resource set indicated by the SRS resource set index.

In some embodiments, n is equal to 1 (n = 1). That is, the n uplink transmissions may be a single uplink transmission, e.g., an uplink transmission of a single TRP/panel.

In some embodiments, n is greater than 1 (n > 1). That is, the n uplink transmissions may be multiple uplink transmissions, e.g., uplink transmissions of multiple TRPs/panels. The uplink transmissions of multiple TRPs/panels may be scheduled by single DCI, or may be scheduled by multiple DCIs.

That is, the embodiments of the present disclosure may be applicable to the uplink transmission of a single TRP/panel, or may be applicable to the uplink transmissions of multiple TRPs/panels. The uplink transmissions of multiple TRPs/panels may be scheduled by single DCI, or may be scheduled by multiple DCIs, which will not be limited in the present disclosure.

In some embodiments, in a case where n is greater than 1 (n > 1), configurations of transmission parameters in different transmission parameter sets among the n transmission parameter sets are completely the same. This case may correspond to a case where terminal device capabilities corresponding to the n uplink transmissions are the same, for example, terminal device capabilities associated with panels used by the n uplink transmissions are the same.

For example, the n transmission parameter sets include a first transmission parameter set and a second transmission parameter set, the first transmission parameter set includes a first SRS resource set index and a first maximum number of transmission layers, the second transmission parameter set includes a second SRS resource set index and a second maximum number of transmission layers, the first SRS resource set index and the second SRS resource set index are the same, and the first maximum number of transmission layers and the second maximum number of transmission layers may be the same.

In some embodiments, in a case where n is greater than 1 (n > 1), configurations of transmission parameters in different transmission parameter sets among the n transmission parameter sets are partially different, or completely different.

For example, the n transmission parameter sets include a first transmission parameter set and a second transmission parameter set, the first transmission parameter set includes a first SRS resource set index and a first maximum number of transmission layers, the second transmission parameter set includes a second SRS resource set index and a second maximum number of transmission layers, the first SRS resource set index and the second SRS resource set index are different, and the first maximum number of transmission layers and the second maximum number of transmission layers may be the same.

As another example, the n transmission parameter sets include a first transmission parameter set and a second transmission parameter set, the first transmission parameter set includes a first SRS resource set index and a first maximum number of transmission layers, the second transmission parameter set includes a second SRS resource set index and a second maximum number of transmission layers, the first SRS resource set index and the second SRS resource set index are different, and the first maximum number of transmission layers and the second maximum number of transmission layers may be different.

It should be understood that in the embodiments of the present disclosure, in a case where n is greater than (n > 1), the numbers of transmission parameters included in different transmission parameter sets among the n transmission parameter sets may be the same, or may be different.

In some embodiments, the n transmission parameter sets include a first transmission parameter set and a second transmission parameter set, the first transmission parameter set includes y transmission parameters, y being a positive integer greater than 1, and the second transmission parameter set includes z transmission parameters, z being a positive integer. In response to that the y transmission parameters include the z transmission parameters, and y is greater than z, that is, the y transmission parameters exceed the z transmission parameters by (y - z) transmission parameters, then for the second transmission parameter set, a configuration of (y - z) transmission parameters may be the same as a configuration of (y - z) transmission parameters in the first transmission parameter set.

For example, the first transmission parameter set includes a first SRS resource set index, a first maximum number of transmission layers, and a first maximum number of SRS ports. The second transmission parameter set includes a second SRS resource set index and a second maximum number of transmission layers. The first transmission parameter set has one more transmission parameter than the second transmission parameter set, that is, the maximum number of SRS ports. Then, for the second transmission parameter set, a maximum number of SRS ports may be the same as the maximum number of SRS ports included in the first transmission parameter set, that is, it adopts the first maximum number of SRS ports.

In some embodiments, multiple antenna panels are deployed on the terminal device, and at least two antenna panels among the multiple antenna panels are associated with different numbers of SRS ports.

For example, a first antenna panel and a second antenna panel are deployed on the terminal device, and the first antenna panel and the second antenna panel are associated with different numbers of SRS ports.

As another example, a first antenna panel, a second antenna panel, and a third antenna panel are deployed on the terminal device, and at least two of the first antenna panel, the second antenna panel, and the third antenna panel are associated with different numbers of SRS ports. For example, the first antenna panel and the second antenna panel are associated with different numbers of SRS ports, or the first antenna panel and the third antenna panel are associated with different numbers of SRS ports, or the first antenna panel, the second antenna panel and the third antenna panel are associated with different numbers of SRS ports, as illustrated in scenarios in FIGS. 5 to 7.

In some embodiments, the terminal device capabilities include but are not limited to: antenna port capabilities supported by the terminal device for transmitting uplink transmissions or receiving downlink transmissions, such as the number of SRS ports supported by the terminal device for transmitting uplink transmissions or receiving downlink transmissions, or may further include other capabilities that affect transmission parameters, which will not be limited in the disclosure.

In some embodiments, the terminal device capabilities may be terminal device capabilities for the n uplink transmissions of the terminal device, for example including antenna port capabilities supported by the terminal device for transmitting the n uplink transmissions.

In some embodiments, the terminal device reporting the terminal device capabilities to the network device may mean that: the terminal device initially reports the terminal device capabilities to the network device, or it may mean that the terminal device reports updated terminal device capabilities to the network device.

For example, in a case where the terminal device capabilities change, the terminal device reports updated terminal device capabilities to the network device. The updated terminal device capabilities are currently supported terminal device capabilities. For example, the terminal device capabilities may be antenna port capabilities supported for currently transmitting uplink transmissions or receiving downlink transmissions, e.g., the number of SRS ports supported by the terminal device for currently transmitting uplink transmissions or receiving downlink transmissions.

In some embodiments, a change in terminal device capabilities may include: a change in antenna port capabilities supported by the terminal device for transmitting uplink transmissions or receiving downlink transmissions, e.g., a change in the number of SRS ports supported for transmitting uplink transmissions or receiving downlink transmissions. It should be understood that the present disclosure does not limit a reason that triggers the change in terminal device capabilities. For example, in a case where the terminal device dynamically switches panels for transmitting uplink transmissions and for receiving downlink transmissions, and the number of SRS ports associated with the panels before and after the switch is different, the terminal device capabilities may change.

For example, multiple antenna panels (for example, including a first antenna panel and a second antenna panel) are deployed on the terminal device side. Considering transmitting uplink transmissions as an example, in response to that an antenna panel used for an uplink transmission to be transmitted by the terminal device is switched from the first antenna panel to the second antenna panel and the number of SRS ports associated with the first antenna panel is different from the number of SRS ports associated with the second antenna panel, it may be considered that the terminal device capabilities supported by the terminal device for transmitting uplink transmissions change.

As another example, multiple antenna panels (for example, including a first antenna panel, a second antenna panel, and a third antenna panel) are deployed on the terminal device side. Considering transmitting uplink transmissions as an example, uplink transmissions to be transmitted by the terminal device include two uplink transmissions. In response to that antenna panels used by the two uplink transmissions are switched from the first antenna panel and the second antenna panel to the second antenna panel and the third antenna panel, and the number of SRS ports associated with the first antenna panel, the number of SRS ports associated with the second antenna panel, and the number of SRS ports associated with the third antenna panel are all different, it may be considered that the terminal device capabilities supported by the terminal device for transmitting uplink transmissions change.

In some embodiments, the n transmission parameter sets may be determined based on the terminal device capabilities reported by the terminal device. The n transmission parameter sets are suitable for the reported terminal device capabilities.

In some embodiments, the n transmission parameter sets may be n transmission parameter sets initially activated by the network device, or may be n transmission parameter sets updated by the network device.

In some embodiments, the network device may configure m transmission parameter sets for the terminal device (for example, by RRC signaling), where the m transmission parameter sets are suitable for various terminal device capabilities. In a case where the terminal device initially reports the terminal device capabilities, the network device may activate n transmission parameter sets among the m transmission parameter sets and indicate the n transmission parameter sets to the terminal device. Alternatively, in a case where the terminal device reports updated terminal device capabilities, the network device may update the activated transmission parameter sets to be suitable for the updated terminal device capabilities. For example, the network device may dynamically indicate the updated transmission parameter set to the terminal device (for example, by a media access control control element (MAC CE) or DCI), where m is a positive integer greater than 2.

In some embodiments, the RRC signaling may include the m transmission parameter sets. Furthermore, in a case where the terminal device reports the terminal device capabilities, the network device may dynamically indicate the n transmission parameter sets among the m transmission parameter sets, and the terminal device may transmit uplink transmissions based on the n transmission parameter sets.

In some other embodiments, the RRC signaling may include indexes corresponding to the m transmission parameter sets and specific transmission parameter configuration. Furthermore, in a case where the terminal device reports the terminal device capabilities, the network device may indicate an index of an activated or updated transmission parameter set. In this way, the terminal device may determine a target transmission parameter set based on the index as well as a transmission parameter configuration corresponding to the index obtained from the RRC signaling, and then transmit an uplink transmission based on the target transmission parameter set.

In some embodiments, the n uplink transmissions of the terminal device may include all uplink transmissions to be transmitted by the terminal device, or may only include uplink transmissions of transmission parameters to be updated, e.g., uplink transmissions affected by the change in the terminal device capabilities.

For example, all uplink transmissions to be transmitted by the terminal device include N uplink transmissions, and the n uplink transmissions may include part or all of the N uplink transmissions. For example, the antenna port capabilities supported by the terminal device for transmitting the n uplink transmissions change.

Next, the manner of indicating the transmission parameter set will be described with reference to specific embodiments.

Embodiment 1: a transmission parameter set is indicated by a MAC CE.

Embodiment 1 may be applied to an uplink transmission of a single TRP/panel, uplink transmissions of multiple TRPs/panels scheduled by single DCI, and uplink transmissions of multiple TRPs/panels scheduled by multiple DCIs.

In some embodiments, in a case where the terminal device capabilities change, for example, the terminal device dynamically switches the panel for transmitting the uplink transmissions or the panel for receiving the downlink transmissions, resulting in a change in the terminal device capabilities, the terminal device may report the updated terminal device capabilities to the network device. Furthermore, the network device updates n transmission parameter sets by the MAC CE for current n uplink transmissions or downlink transmissions of the network device, which improves flexibility of panel switching in a case where panels with asymmetric capabilities are deployed on the terminal device side, dynamically indicates the updated transmission parameter set by the MAC CE, and shortens switching delay.

In some embodiments, the MAC CE may be used for indicating one or more of the following information:
an SRS resource set index, an SRS resource index, a number of SRS resources, a maximum number of SRS ports, or a maximum number of transmission layers corresponding to the SRS resource set index.

For example, the MAC CE may be used for indicating one or more of: an updated SRS resource set, SRS resources included in the updated SRS resource set, the number of SRS resources included in the updated SRS resource set, the maximum number of SRS ports of the SRS resources included in the updated SRS resource set, or the maximum number of transmission layers corresponding to the updated SRS resource set.

In some embodiments, the n transmission parameter sets belong to the m transmission parameter sets (that is, the n transmission parameter sets are included in the m transmission parameter sets), and m SRS resource set indexes are configured by RRC signaling, where m is a positive integer greater than 2, and n is less than or equal to m (n ≤ m). For example, the network device may configure the m transmission parameter sets for the terminal device by the RRC signaling, and then indicate the target transmission parameter set for uplink transmission, i.e., the n transmission parameter sets, by the MAC CE.

In a specific embodiment, m is equal to 4 (m = 4).

In some embodiments, in a case where the terminal device reports the updated terminal device capabilities, the network device may select an updated transmission parameter set from the m transmission parameter sets based on the updated terminal device capabilities, and then indicate the updated transmission parameter set to the terminal device by the MAC CE. For example, the network device may select an appropriate SRS resource set index based on an updated number of SRS ports reported by the terminal device. For example, the maximum number of SRS ports of SRS resources included in the SRS resource set indicated by the selected SRS resource set index is greater than or equal to the number of SRS ports reported by the terminal device.

In a specific embodiment, the network device may configure, by the RRC signaling, more than two SRS resource sets for use of 'codebook' or 'non-codebook', to be suitable for different terminal device capabilities respectively. Furthermore, the SRS resource sets associated with the uplink transmissions of multiple TRPs/panels (i.e., the SRS resource sets used for the uplink transmissions of multiple TRPs/panels) are switched by the MAC CE. The network device indicates the appropriate SRS resource set by the MAC CE, which shortens switching delay and improves flexibility of the implementation of the terminal device.

In some embodiments, the n transmission parameter sets may be indicated by one MAC CE, or may be indicated by n MAC CEs. For example, each of the n MAC CEs is used for indicating one transmission parameter set.

In a case where n is equal to 1 (n = 1), for example, for an uplink transmission of a single TRP/panel, the network device may indicate one transmission parameter set for the uplink transmission by one MAC CE.

In a case where n is greater than 1 (n > 1), for example, for uplink transmissions of multiple TRPs/panels scheduled by multiple DCIs, the network device may indicate the n transmission parameter sets by n MAC CEs, where one MAC CE among the n MAC CEs is used for indicating one transmission parameter set.

In a case where n is greater than 1 (n > 1), for example, for uplink transmissions of multiple TRPs/panels scheduled by single DCI, the network device may indicate the n transmission parameter sets by one MAC CE.

The structural design of a MAC CE for carrying a transmission parameter set will be described below with reference to specific embodiments.

Embodiment 1-1: n transmission parameter sets are indicated by n MAC CEs.

In this case, one MAC CE may be used for indicating one transmission parameter set, and the one transmission parameter set is used for one uplink transmission among the n uplink transmissions.

Case 1: the one uplink transmission may be an uplink transmission of a single TRP/panel.

For example, for the uplink transmission of a single TRP/panel, the network device may indicate an updated transmission parameter set for the uplink transmission of a single TRP/panel by one MAC CE. Correspondingly, the terminal device may obtain the updated transmission parameter set for the uplink transmission of a single TRP/panel by one MAC CE.

Case 2: the one uplink transmission may be one uplink transmission among uplink transmissions of multiple TRPs/panels scheduled by multiple DCIs.

For example, for the uplink transmissions of multiple TRPs/panels scheduled by the multiple DCIs, the network device may indicate an updated transmission parameter set for each uplink transmission of multiple uplink transmissions by multiple MAC CEs respectively. Correspondingly, the terminal device may obtain the updated transmission parameter set for each uplink transmission among the multiple uplink transmissions by multiple MAC CEs.

As another example, for the uplink transmissions of multiple TRPs/panels scheduled by the multiple DCIs, the network device may only update transmission parameter sets corresponding to part of the uplink transmissions. Then, the network device may indicate a transmission parameter set corresponding to each uplink transmission of the n uplink transmissions used for transmission parameter sets are to be updated through n MAC CEs respectively, where the n uplink transmissions are uplink transmissions that require update of transmission parameter sets among all uplink transmissions to be transmitted by the terminal device.

Optionally, in Case 2, the MAC CE may include a CORESET group index (e.g., coreset pool index) and/or TCI state, used for indicating the uplink transmission to which the transmission parameter set in the MAC CE is applied. For example, the transmission parameter set in the MAC CE is used for the uplink transmissions scheduled by the DCI associated with the CORESET group index and/or TCI state in the MAC CE.

In some embodiments, one transmission parameter set may include: one SRS resource set index; and one or more transmission parameters associated with one SRS resource set index, for example, including but not limited to one or more of: the maximum number of transmission layers, the maximum number of transmission layers, the SRS resource index, the number of SRS resources, or the maximum number of SRS ports.

In some embodiments, the MAC CE may include: one SRS resource set index; and one or more transmission parameters associated with the one SRS resource set index, for example, including but not limited to one or more of: the maximum number of transmission layers, the maximum number of transmission layers, the SRS resource index, the number of SRS resources, or the maximum number of SRS ports.

In some embodiments, the MAC CE may further include a serving cell index (e.g., serving cell ID) and a bandwidth part index (e.g., BWP ID).

The structural design of a MAC CE for indicating one transmission parameter set will be described below with reference to specific examples.

### Example 1.

In some embodiments, the MAC CE is used for indicating the following information:
one SRS resource set index and the maximum number of transmission layers.

That is, one transmission parameter set may include the one SRS resource set index and the maximum number of transmission layers.

For example, the network device may select an appropriate SRS resource set based on an updated number of SRS ports reported by the terminal device, and then indicate the SRS resource set index corresponding to the SRS resource set to the terminal device, where the SRS resource set index is associated with the maximum number of transmission layers.

Optionally, Example 1 may be applicable to updating an SRS resource set for use of codebook or non-codebook.

Optionally, Example 1 may be applicable to updating a transmission parameter set corresponding to an uplink transmission of a single TRP/panel.

As a specific example, the MAC CE may include one or more of the following information:
a serving cell index (e.g., serving cell ID)
a bandwidth part index (e.g., BWP ID);
an SRS resource set index;
a maximum number of transmission layers; or
reserved bits.

The maximum number of transmission layers is a maximum number of transmission layers corresponding to the SRS resource set index.

Optionally, the SRS resource set index may be a periodic SRS resource set index, a semi-persistent SRS resource set index, or an aperiodic SRS resource set index.

The appropriate SRS resource set and the maximum number of transmission layers are indicated by the MAC CE structure provided in Example 1, thereby shortening the switching delay of the transmission parameters and improving the flexibility of the implementation of the terminal device. The maximum number of transmission layers associated with the SRS resource set is indicated by the MAC CE, which may be applied to both codebook-based and non-codebook-based uplink transmissions. Compared with a case where the maximum number of transmission layers is configured by the RRC, the switching delay of the transmission parameters is shortened.

### Example 2

In some embodiments, the MAC CE is used for indicating the following information:
one SRS resource set index, a maximum number of transmission layers, an SRS resource index, a number of SRS resources, and a maximum number of SRS ports.

That is, one transmission parameter set may include one SRS resource set index, the maximum number of transmission layers, the SRS resource index, the number of SRS resources, and the maximum number of SRS ports.

The maximum number of transmission layers is a maximum number of transmission layers corresponding to the SRS resource set index, the SRS resource index is used for indicating SRS resources included in an SRS resource set indicated by the one SRS resource set index, the number of SRS resources is used for indicating the number of SRS resources included in the SRS resource set indicated by the one SRS resource set index, and the maximum number of SRS ports is used for indicating the maximum number of SRS ports of the SRS resources included in the SRS resource set indicated by the one SRS resource set index.

Optionally, Example 2 may be applicable to updating an SRS resource set for use of codebook.

Optionally, Example 2 may be applied to updating a transmission parameter set corresponding to an uplink transmission of a single TRP/panel.

As a specific example, the MAC CE includes one or more of the following information:
a serving cell ID, a BWP ID, an SRS resource set index, a maximum number of transmission layers, an SRS resource index, a maximum number of SRS ports, or reserved bits.

Optionally, the SRS resource set index may be classified into a periodic SRS resource set index, a semi-persistent SRS resource set index, or an aperiodic SRS resource set index.

Compared with Example 1, in Example 2, the SRS resource index, the number of SRS resources, and the maximum number of SRS ports are added. Appropriate transmission parameters are indicated by the MAC CE structure in Example 2, thereby shortening the switching delay of the transmission parameters and improving the flexibility of the implementation of the terminal device.

In some embodiments, the MAC CE may further be used for indicating a CORESET group index (e.g., coreset pool index) and/or a TCI state, where the coreset pool index and/or the TCI state is used for indicating an uplink transmission to which the transmission parameter set in the MAC CE is applied. In this case, the MAC CE may be used for updating a transmission parameter set corresponding to one uplink transmission among uplink transmissions of multiple TRPs/panels scheduled by multiple DCIs.

Example 3: the MAC CE is used for indicating the following information:
one SRS resource set index, a maximum number of transport layers, a CORESET group index (or a TCI state), an SRS resource index, a number of SRS resources, and a maximum number of SRS ports.

The maximum number of transmission layers is a maximum number of transmission layers corresponding to the SRS resource set index, the SRS resource index is used for indicating SRS resources included in the SRS resource set indicated by the one SRS resource set index, the number of SRS resources is used for indicating the number of SRS resources included in the SRS resource set indicated by the one SRS resource set index, the maximum number of SRS ports is used for indicating a maximum number of SRS ports of the SRS resources included in the SRS resource set indicated by the one SRS resource set index, and the CORESET group index is used for indicating a CORESET group associated with an uplink transmission to which the SRS resource set indicated by the SRS resource set index is applicable. The CORESET group associated with the uplink transmission may mean that the uplink transmission is scheduled by DCI associated with the CORESET group index.

Example 3 may be used for updating a transmission parameter set corresponding to one uplink transmission among uplink transmissions of multiple TRPs/panels scheduled by multiple DCIs. Specifically, the uplink transmission to which the transmission parameter set in the MAC CE is applicable is indicated using the CORESET group index (e.g., coreset pool index) or the TCI state. For example, the uplink transmission may be applicable to the DCI scheduled uplink transmission associated with the CORESET group index or the TCI state.

As a specific example, the MAC CE includes one or more of the following information:
a serving cell ID, a BWP ID, an SRS resource set index, a maximum number of transmission layers, a CORESET group index (or a TCI state), an SRS resource index, a maximum number of SRS ports, or reserved bits.

Optionally, the SRS resource set index may be a periodic SRS resource set index, a semi-persistent SRS resource set index, or an aperiodic SRS resource set index.

The CORESET group index or the TCI state is added to the MAC CE structure illustrated in Example 3, which makes association between transmission parameters and spatial information clearer, and is beneficial for the terminal device updating the transmission parameters of the uplink transmission corresponding to the spatial information.

A specific manner of indicating a transmission parameter set for uplink transmission will be described with reference to a specific example illustrated in FIG. 9.

For example, in the example illustrated in FIG. 9, the network device may configure more than 2 (e.g., 4) SRS resource sets by the RRC signaling, and further indicate two SRS resource sets among the more than 2 SRS resource sets by the MAC CE, where the maximum numbers of SRS ports associated with SRS resources in the two SRS resource sets are 2 and 4, respectively. In a case where antenna panels used for uplink transmissions of multiple TRPs are switched from antenna panel 1 and antenna panel 2 to antenna panel 1 and antenna panel 3, the network device may indicate two updated SRS resource sets by two MAC CEs (e.g., a first MAC CE and a second MAC CE). For example, the first MAC CE indicates a first SRS resource set, and the associated maximum number of SRS ports is 2; and the second MAC CE indicates a second SRS resource set, and the maximum number of associated SRS ports is 1. The first MAC CE may include a first CORESET group index or a first TCI state, which indicates that a transmission parameter set in the first MAC CE is used for an uplink transmission transmitted to TRP1; and the second MAC CE may include a second CORESET group index or a second TCI state, which indicates that a transmission parameter set in the second MAC CE is used for an uplink transmission transmitted to TRP2.

Alternatively, in a case where antenna panels used for uplink transmissions of multiple TRPs are switched from antenna panel 1 and antenna panel 2 to antenna panel 1 and antenna panel 3, it means that an antenna panel used for one uplink transmission does not change, and an antenna panel used for another uplink transmission changes. Then, the network device may only update one transmission parameter set, that is, only update a transmission parameter set corresponding to the uplink transmission where the antenna panel changes. For example, the network device may indicate one updated transmission parameter set by one MAC CE (e.g., a third MAC CE), and the third MAC CE indicates a second SRS resource set, and the maximum number of associated SRS ports is 1. The third MAC CE may include a second CORESET group index or a second TCI state, which indicates that a transmission parameter set in the third MAC CE is used for an uplink transmission transmitted to TRP2.

Embodiment 1-2: n transmission parameter sets are indicated by one MAC CE.

In Embodiment 1-2, n > 1, and the MAC CE may be used for indicating multiple transmission parameter sets.

In Embodiment 1-2, the n uplink transmissions may be uplink transmissions of multiple TRPs/panels scheduled by single DCI, or may be uplink transmissions of multiple TRPs/panels scheduled by multiple DCIs. Optionally, the multiple transmission parameter sets are in one-to-one correspondence with the multiple TRPs/panels. For example, a first transmission parameter set is used for an uplink transmission transmitted to TRP1, and a second transmission parameter set is used for an uplink transmission transmitted to TRP2.

In some embodiments, each transmission parameter set of the n transmission parameter sets may include: one SRS resource set index; and one or more transmission parameters associated with the one SRS resource set index, for example, including but not limited to one or more of: a maximum number of transmission layers, a maximum number of transmission layers, an SRS resource index, a number of SRS resources, or a maximum number of SRS ports.

For example, the MAC CE may include: multiple SRS resource set indexes; and one or more transmission parameters associated with each SRS resource set index of the multiple SRS resource set indexes, such as a maximum number of transmission layers, a maximum number of transmission layers, an SRS resource index, a number of SRS resources, a maximum number of SRS ports, etc.

In some embodiments, each transmission parameter set may correspond to one CORESET group index (e.g., coreset pool index) and/or one TCI state, which is used for indicating an uplink transmission to which the transmission parameter set is applied. For example, the transmission parameter set is applied to an uplink transmission scheduled by DCI associated with the CORESET group index and/or the TCI state.

In some embodiments, the MAC CE may further include a serving cell index (e.g., serving cell ID) and a bandwidth part index (e.g., BWP ID).

The structural design of a MAC CE for indicating multiple transmission parameter sets will be described below with reference to specific examples.

### Example 4

In some embodiments, the MAC CE is used for indicating the following information:
n SRS resource set indexes, and a maximum number of transmission layers corresponding to each SRS resource set index of the n SRS resource set indexes.

Optionally, Example 4 may be applied to uplink transmissions of multiple TRPs/panels scheduled by single DCI.

As a specific example, the MAC CE includes one or more of the following information:
a serving cell index (e.g., serving cell ID), a bandwidth part index (e.g., BWP ID), a first SRS resource set index, a first maximum number of transmission layers, a second SRS resource set index, a second maximum number of transmission layers, or reserved bits.

The first SRS resource set index is used for indicating a first SRS resource set, the second SRS resource set index is used for indicating a second SRS resource set, the first maximum number of transmission layers is a maximum number of transmission layers corresponding to the first SRS resource set index, and the second maximum number of transmission layers is a maximum number of transmission layers corresponding to the second SRS resource set index.

It will be considered that the first SRS resource set index and the first maximum number of transmission layers constitute a first transmission parameter set, the second SRS resource set index and the second maximum number of transmission layers constitute a second transmission parameter set, and the first transmission parameter set and the second transmission parameter set are respectively used for different uplink transmissions.

Optionally, the first SRS resource set index may be a periodic SRS resource set index, a semi-persistent SRS resource set index, or an aperiodic SRS resource set index.

Optionally, the second SRS resource set index may be a periodic SRS resource set index, a semi-persistent SRS resource set index, or an aperiodic SRS resource set index.

The appropriate SRS resource set and the maximum number of transmission layers for multiple uplink transmissions are indicated by the MAC CE structure provided in Example 4, thereby shortening the switching delay of transmission parameters and improving the flexibility of the implementation of the terminal device. The maximum number of transmission layers associated with the SRS resource set is indicated by the MAC CE, which may be applied to both codebook-based and non-codebook-based uplink transmissions. Compared with the case where the maximum number of transmission layers is configured by the RRC, the switching delay of transmission parameters is shortened.

Optionally, in Example 4, the MAC CE may further include: a CORESET group index (e.g., coreset pool index) and/or a TCI state, which correspond to each SRS resource set index of the n SRS resource indexes and is used for indicating an uplink transmission to which the SRS resource set index is applied. In this case, Example 4 may be applied to uplink transmissions of multiple TRPs/panels scheduled by multiple DCIs.

### Example 5

In some embodiments, the MAC CE is used for indicating the following information:
n SRS resource set indexes, a maximum number of transmission layers corresponding to each SRS resource set index of the n SRS resource indexes, and a maximum number of SRS ports corresponding to each SRS resource set index of the n SRS resource indexes.

Optionally, Example 5 may be applied to uplink transmissions of multiple TRPs/panels scheduled by single DCI.

As a specific example, the MAC CE includes one or more of the following information:
a serving cell index (e.g., serving cell ID), a bandwidth part index (e.g., BWP ID), a first SRS resource set index, a first maximum number of transmission layers, a first maximum number of SRS ports, a second SRS resource set index, a second maximum number of transmission layers, a second maximum number of SRS ports, or reserved bits.

The first SRS resource set index is used for indicating a first SRS resource set, the second SRS resource set index is used for indicating a second SRS resource set, the first maximum number of transmission layers is a maximum number of transmission layers corresponding to the first SRS resource set index, the second maximum number of transmission layers is a maximum number of transmission layers corresponding to the second SRS resource set index, the first maximum number of SRS ports is a maximum number of SRS ports of SRS resources included in the first SRS resource set, and the second maximum number of SRS ports is a maximum number of SRS ports of SRS resources included in the second SRS resource set.

It will be considered that the first SRS resource set index, the first maximum number of transmission layers and the first maximum number of SRS ports constitute a first transmission parameter set, the second SRS resource set index, the second maximum number of transmission layers and the second maximum number of SRS ports constitute a second transmission parameter set, and the first transmission parameter set and the second transmission parameter set are respectively used for different uplink transmissions.

Optionally, the first SRS resource set index may be a periodic SRS resource set index, a semi-persistent SRS resource set index, or an aperiodic SRS resource set index.

Optionally, the second SRS resource set index may be a periodic SRS resource set index, a semi-persistent SRS resource set index, or an aperiodic SRS resource set index.

The appropriate SRS resource set, the maximum number of transmission layers, and the maximum number of SRS ports for multiple uplink transmissions are indicated by the MAC CE structure provided in Example 5, thereby shortening the switching delay of transmission parameters and improving the flexibility of the implementation of the terminal device. The SRS resource set, the maximum number of transmission layers, and the maximum number of SRS ports are indicated by the MAC CE, which may be applied to both codebook-based and non-codebook-based uplink transmissions. Compared with the case where the maximum number of transmission layers is configured by the RRC, the switching delay of transmission parameters is shortened.

Optionally, in Example 5, the MAC CE may further include a CORESET group index (e.g., coreset pool index) and/or a TCI state, which correspond to each SRS resource set index of multiple SRS resource indexes and is used for indicating an uplink transmission to which the SRS resource set index is applied. In this case, Example 5 may be applied to uplink transmissions of multiple TRPs/panels scheduled by multiple s.

### Example 6

In some embodiments, the MAC CE is used for indicating the following information:
n SRS resource set indexes, a maximum number of transmission layers corresponding to each SRS resource set index of the n SRS resource indexes, an SRS resource index corresponding to each SRS resource set index of the n SRS resource indexes, a number of SRS resources corresponding to each SRS resource set index of the n SRS resource indexes, and a maximum number of SRS ports corresponding to each SRS resource set index of the n SRS resource indexes.

Optionally, Example 6 may be applied to uplink transmissions of multiple TRPs/panels scheduled by single DCI.

As a specific example, the MAC CE includes one or more of the following information:
a serving cell index (e.g., serving cell ID), a bandwidth part index (e.g., BWP ID), a first SRS resource set index, a first maximum number of transmission layers, a first SRS resource index, a first maximum number of SRS ports, a second SRS resource set index, a second maximum number of transmission layers, a second SRS resource index, a second maximum number of SRS ports, or reserved bits.

The first SRS resource set index is used for indicating a first SRS resource set, the second SRS resource set index is used for indicating a second SRS resource set, the first maximum number of transmission layers is a maximum number of transmission layers corresponding to the first SRS resource set index, the second maximum number of transmission layers is a maximum number of transmission layers corresponding to the second SRS resource set index, the first SRS resource index is an SRS resource index corresponding to SRS resources included in the first SRS resource set, the second SRS resource index is an SRS resource index corresponding to SRS resources included in the second SRS resource set, the first maximum number of SRS ports is a maximum number of SRS ports of the SRS resources included in the first SRS resource set, and the second maximum number of SRS ports is a maximum number of SRS ports of the SRS resources included in the second SRS resource set.

It will be considered that the first SRS resource set index, the first maximum number of transmission layers, the first SRS resource index and the first maximum number of SRS ports constitute a first transmission parameter set, the second SRS resource set index, the second maximum number of transmission layers, the second SRS resource index, and the second maximum number of SRS ports constitute a second transmission parameter set, and the first transmission parameter set and the second transmission parameter set are respectively used for different uplink transmissions.

Optionally, the first SRS resource set index may be a periodic SRS resource set index, a semi-persistent SRS resource set index, or an aperiodic SRS resource set index.

Optionally, the second SRS resource set index may be a periodic SRS resource set index, a semi-persistent SRS resource set index, or an aperiodic SRS resource set index.

Compared with Example 4, in Example 6, the SRS resource index, the number of SRS resources, and the maximum number of SRS ports are added. The appropriate transmission parameters are indicated by the MAC CE structure in Example 6, thereby shortening the switching delay of the transmission parameters and improving the flexibility of the implementation of the terminal device.

Optionally, in Example 6, the MAC CE may further include a CORESET group index (e.g., coreset pool index) and/or a TCI state, which correspond to each SRS resource set index of multiple SRS resource indexes and is used for indicating an uplink transmission to which the SRS resource set index is applied. In this case, Example 6 may be applied to uplink transmissions of multiple TRPs/panels scheduled by multiple DCIs.

The manner of indicating the network device in Embodiment 1-2 will be described by taking the example in FIG. 9 as an example. For example, the network device may configure more than 2 (e.g., 4) SRS resource sets by the RRC signaling, and further indicate two SRS resource sets among the more than 2 SRS resource sets by the MAC CE, where the maximum numbers of SRS ports associated with the SRS resources in the two SRS resource sets are 2 and 4, respectively. In a case where antenna panels used for uplink transmissions of multiple TRPs are switched from antenna panel 1 and antenna panel 2 to antenna panel 1 and antenna panel 3, the network device may indicate two updated SRS resource sets by one MAC CE. For example, the one MAC CE indicates a first SRS resource set, and a maximum number of associated SRS ports is 2; and the one MAC CE further indicates a second SRS resource set, and a maximum number of associated SRS ports is 1. The MAC CE may further indicate that the first SRS resource set is associated with a first CORESET group index or a first TCI state, which means that a transmission parameter set in the first MAC CE is used for an uplink transmission transmitted to TRP1; and the MAC CE may further indicate that the first SRS resource set is associated with a second CORESET group index or a second TCI state, which means that a transmission parameter set in the second MAC CE is used for an uplink transmission transmitted to TRP2.

In a case where a CORESET group index or a TCI state is added to the MAC CE structure illustrated in Examples 4 to 6, the association between the transmission parameters and the spatial information may be made clearer. That is, the CORESET group index or the TCI state may indicate the uplink transmissions to which the transmission parameters are applied, which is beneficial for the terminal device updating the transmission parameters of the uplink transmissions corresponding to the spatial information.

Embodiment 1-3: n transmission parameter sets are indicated by p MAC CEs, where p is greater than 1 (p > 1) and p is less than n (p < n).

In Embodiment 1-3, n is greater than 2 (n > 2).

In Embodiment 1-3, the n uplink transmissions may include uplink transmissions scheduled by multiple DCIs and/or uplink transmissions scheduled by single DCI.

As an example, denoted as scenario 1, the n uplink transmissions may include r uplink transmissions, and (n - r) uplink transmissions, where each uplink transmission of the r uplink transmissions is scheduled by single DCI, and the (n - r) uplink transmissions are uplink transmissions of multiple TRPs/panels scheduled by single DCI, where r is a positive integer.

As another example, noted as scenario 2, the n uplink transmissions may include s uplink transmissions and (n - s) uplink transmissions, where the s uplink transmissions are uplink transmissions of multiple TRPs/panels scheduled by single DCI, and the (n - s) uplink transmissions are uplink transmissions of multiple TRPs/panels scheduled by multiple DCIs, where s is a positive integer greater than 1.

In some embodiments, the correspondence between p MAC CEs and n transmission parameter sets may be described as follows.

Each MAC CE of r MAC CEs among the p MAC CEs is used for indicating one transmission parameter set; and each MAC CE of the remaining (p - r) MAC CEs is used for indicating multiple transmission parameter sets, e.g., used for indicating two transmission parameter sets, where r is a positive integer and r is less than p.

For example, for the above scenario 1, each uplink transmission of the r uplink transmissions is scheduled by single DCI, a transmission parameter set corresponding to each uplink transmission of the r uplink transmissions may be indicated by a single MAC CE. Transmission parameter sets corresponding to the remaining (n - r) uplink transmissions may be indicated by one MAC CE.

As a specific example, n is equal to 3 (n = 3), p is equal to 2 (p = 2), two transmission parameter sets may be indicated by one MAC CE, and one transmission parameter set may be indicated by another MAC CE.

In some other embodiments, the correspondence between p MAC CEs and n transmission parameter sets may be described as follows.

Each MAC CE of the p MAC CEs is used for indicating multiple transmission parameter sets, for example, used for indicating two transmission parameter sets.

For example, for the above scenario 2, transmission parameter sets corresponding to the s uplink transmissions may be indicated by one MAC CE. A transmission parameter set corresponding to each uplink transmission of the remaining (n - s) uplink transmissions may be indicated by a single MAC CE.

As a specific example, n is equal to 4 (n = 4), p is equal to 2 (p = 2), and 4 transmission parameter sets may be indicated by two MAC CEs, where each MAC CE is used for indicating 2 transmission parameter sets.

In some embodiments, as for the MAC CE indicating one transmission parameter set among the p MAC CEs, reference may be made to the MAC CE structure design in Embodiment 1-1, which will not be repeated here for the sake of brevity.

In some embodiments, as for the MAC CE indicating multiple transmission parameter sets among the p MAC CEs, reference may be made to the MAC CE structure design in Embodiment 1-2, which will not be repeated here for the sake of brevity.

FIG. 10 is a schematic interactive diagram of a manner of updating a transmission parameter set based on Embodiment 1 provided in embodiments of the present disclosure. As shown in FIG. 10, the manner may include the following steps.

In S211, the network device configures multiple transmission parameter sets for the terminal device by RRC signaling, and the multiple transmission parameter sets correspond to different terminal device capabilities. For example, the multiple transmission parameter sets correspond to different antenna port capabilities.

In S212, the terminal device reports the terminal device capabilities.

For example, the terminal device initially reports the terminal device capabilities; alternatively, in response to that the terminal device capabilities change, the terminal device reports changed terminal device capabilities, i.e., updated terminal device capabilities.

In S213, the network device indicates a target transmission parameter set (corresponding to the n transmission parameter sets mentioned above) by the MAC CE.

For example, the network device may determine the target transmission parameter set based on the reported terminal device capabilities.

The target transmission parameter set may be an initially activated transmission parameter set, or may be an updated transmission parameter set.

In some specific embodiments, for an uplink transmission of a single TRP/panel, the network device may indicate a target transmission parameter set for the uplink transmission by one MAC CE. For example, the target transmission parameter set is indicated by the MAC CE structure illustrated in Embodiment 1-1 (e.g., Example 1 or Example 2).

In some other specific embodiments, for uplink transmissions of multiple TRPs/panels scheduled by multiple DCIs, the network device may indicate a target transmission parameter set for each of the multiple uplink transmissions by multiple MAC CEs. For example, the target transmission parameter set may be indicated by the MAC CE structure illustrated in Embodiment 1-1 (e.g., Example 3), or the target transmission parameter set may be indicated by the MAC CE structure illustrated in Embodiment 1-2. Alternatively, the target transmission parameter set may be indicated by the manner described in Embodiment 1-3.

In yet some other specific embodiments, for uplink transmissions of multiple TRPs/panels scheduled by single DCI, the network device may indicate a target transmission parameter set for each of the multiple uplink transmissions by one MAC CE. For example, the target transmission parameter set is indicated by the MAC CE structure illustrated in Embodiment 1-2. Alternatively, the target transmission parameter set may be indicated by the manner described in the Embodiment 1-3.

In S214, the terminal device transmits an uplink transmission based on the indicated target transmission parameter set.

Therefore, in Embodiment 1, the network device indicates the target transmission parameter set by the MAC CE, which enables the network device to dynamically activate or update the transmission parameter set used for the uplink transmission based on the terminal device capabilities, makes the activated or updated transmission parameter set more matched with the reported terminal device capabilities, and in turn improves the reliability of uplink transmission.

Embodiment 2: a transmission parameter set is indicated by DCI.

In some embodiments, the n transmission parameter sets belong to k transmission parameter sets, the k transmission parameter sets belong to m transmission parameter sets, the m transmission parameter sets are configured by RRC signaling, and the k transmission parameter sets are activated by a MAC CE among the m transmission parameter sets, where m is a positive integer greater than 2, k is less than or equal to m (k ≤ m), and n is less than or equal to k (n ≤ k).

For example, the network device may configure the m transmission parameter sets for the terminal device by the RRC signaling, indicate the activated k transmission parameter sets by the MAC CE, and indicate a target transmission parameter set for uplink transmission among the k transmission parameter sets by the DCI.

In a specific embodiment, m is equal to 4 (m = 4).

In a specific embodiment, k is equal to 2 (k = 2).

Therefore, in the embodiments of the present disclosure, in a case where the panel used for transmitting uplink transmissions or receiving downlink transmissions is dynamically switched, the network device updates the appropriate transmission parameter set by the DCI, which shortens the switching delay and improves the flexibility of the implementation of the terminal device.

In some embodiments, in a case where the terminal device capabilities change, for example, the terminal device dynamically switches the panel for transmitting uplink transmissions or the panel for receiving downlink transmissions, resulting in a change in the terminal device capabilities, then the terminal device may report the updated terminal device capabilities to the network device. Furthermore, the network device may activate the k transmission parameter sets based on the updated terminal device capabilities, and indicate the target transmission parameter set(s) (i.e., the n transmission parameter sets) among the k transmission parameter sets to the terminal device by the DCI, for current n uplink transmissions or downlink transmissions of the terminal device, thereby improving the flexibility of panel switching in a case where panels with asymmetric capabilities are deployed on the terminal device side. In addition, the updated transmission parameter set is dynamically indicated by the DCI, which shortens the switching delay.

In a specific embodiment, the network device may configure, by the RRC signaling, more than two SRS resource sets for use of 'codebook' or 'non-codebook', to be suitable for different terminal device capabilities respectively, and activate k SRS resource sets among the more than two SRS resource sets by the MAC CE. Furthermore, the SRS resource set associated with the uplink transmission to be transmitted (i.e., the SRS resource set used for the uplink transmission to be transmitted) is indicated by the DCI. The network device indicates the appropriate SRS resource set by the DCI, thereby shortening the switching delay and improving the flexibility of the implementation of terminal device.

In some embodiments, the n transmission parameter sets may be indicated by one DCI.

For example, for an uplink transmission of a single TRP/panel, that is, n = 1, the network device may indicate one transmission parameter set for the uplink transmission by one DCI. The one DCI may be DCI for scheduling the uplink transmission.

As another example, for uplink transmissions of multiple TRPs/panels scheduled by single DCI, that is, n > 1, the network device may indicate the n transmission parameter sets by one DCI. For example, the one DCI may be DCI for scheduling multiple uplink transmissions.

In some other embodiments, the n transmission parameter sets may be indicated by n DCIs. For example, each of the n DCIs is used for indicating one transmission parameter set.

For example, for uplink transmissions of multiple TRPs/panels scheduled by multiple DCIs, that is, n > 1, the network device may indicate the n transmission parameter sets by the n DCIs, and one DCI among the n DCIs is used for indicating one transmission parameter set. For example, one DCI may be a transmission parameter set used for the DCI scheduling the uplink transmission.

In yet some other embodiments, the n transmission parameter sets may be indicated by q DCIs, where n is greater than 2 (n > 2), and q is greater than 1 (q > 1) and q is less than n (q < n).

In some embodiments, the correspondence between the q DCIs and the n transmission parameter sets may be described as follows.

Each of s DCIs among the q DCIs is used for indicating one transmission parameter set; and each of the remaining (p - r) DCIs is used for indicating multiple transmission parameter sets, e.g., used for indicating two transmission parameter sets, where s is a positive integer and s is less than q.

Alternatively, each of the q DCIs is used for indicating multiple transmission parameter sets, e.g., used for indicating two transmission parameter sets, where s is a positive integer and s is less than q.

As a specific example, n is equal to 3 (n = 3), q is equal to 2 (q = 2), two transmission parameter sets may be indicated by one DCI, and one transmission parameter set may be indicated by another DCI.

As a specific example, n is equal to 4 (n = 4), q is equal to 2 (q = 2), four transmission parameter sets may be indicated by two DCIs, where each DCI is used for indicating two transmission parameter sets.

The structural design of the DCI for carrying the transmission parameter set will be described below with reference to specific embodiments.

In some embodiments, the DCI includes a first information field, and the first information field indicates x transmission parameter sets, where x is equal to 1 (x = 1), or x is equal to n (x = n), or x is greater than 1 and less than n (1 < x < n).

Optionally, the first information field may be an existing information field (e.g., a reserved field) in the DCI, or may be a newly added information field, which will not be limited in the present disclosure.

In some embodiments, the DCI may be of DCI format 0_1 or DCI format 0_2.

Embodiment 2-1: the first information field is used for indicating one transmission parameter set, and the one transmission parameter set is used for one uplink transmission. Embodiment 2-1 may be applied to an uplink transmission of a single TRP/panel and uplink transmissions of multiple TRPs/panels scheduled by multiple DCIs.

In this case, the n transmission parameter sets may be indicated by first information fields in n DCIs respectively.

Case 1: the one uplink transmission may be an uplink transmission of a single TRP/panel.

For example, for the uplink transmission of a single TRP/panel, the network device may indicate a transmission parameter set for the uplink transmission of a single TRP/panel by DCI, and the DCI may be DCI for scheduling the uplink transmission. Correspondingly, the terminal device may obtain the transmission parameter set for the uplink transmission of a single TRP/panel by the DCI.

Case 2: the one uplink transmission may be one uplink transmission among uplink transmissions of multiple TRPs/panels scheduled by multiple DCIs.

For example, for the uplink transmissions of multiple TRPs/panels scheduled by the multiple DCIs, the network device may indicate a transmission parameter set for each uplink transmission of the multiple uplink transmissions by multiple DCIs. Correspondingly, the terminal device may obtain the transmission parameter set for each uplink transmission of the multiple uplink transmissions by the multiple DCIs.

For example, the multiple DCIs include first DCI and second DCI, the first DCI is used for scheduling a first uplink transmission, and the second DCI is used for scheduling a second uplink transmission. The network device may indicate a transmission parameter set for the first uplink transmission by the first DCI and indicate a transmission parameter set for the second uplink transmission by the second DCI.

Embodiment 2-2: the first information field is used for indicating multiple transmission parameter sets, and each transmission parameter set of the multiple transmission parameter sets is used for one uplink transmission. Embodiment 2-2 may be applied to uplink transmissions of multiple TRPs/panels scheduled by single DCI and uplink transmissions of multiple TRPs/panels scheduled by multiple DCIs. Optionally, the multiple transmission parameter sets are in one-to-one correspondence with multiple TRPs/panels. For example, a first transmission parameter set is used for an uplink transmission transmitted to TRP1, and a second transmission parameter set is used for an uplink transmission transmitted to TRP2.

In some embodiments, the first information field is used for indicating n transmission parameter sets, and each transmission parameter set of the n transmission parameter sets is used for one uplink transmission among n uplink transmissions, where n is greater than 1.

For example, for uplink transmissions of multiple TRPs/panels scheduled by a single DCI, the network device may indicate a transmission parameter set for each uplink transmission of the multiple uplink transmissions by one DCI, and the one DCI may be DCI for scheduling the multiple uplink transmissions. Correspondingly, the terminal device may obtain the transmission parameter set for each uplink transmission among the multiple uplink transmissions by the one DCI.

As another example, for uplink transmissions of multiple TRPs/panels scheduled by multiple DCIs, the network device may indicate a transmission parameter set for each uplink transmission of multiple uplink transmissions by one DCI, and the one DCI may be one of multiple DCIs that schedule the multiple uplink transmissions. Correspondingly, the terminal device may obtain the transmission parameter set for each uplink transmission of the multiple uplink transmissions by the one DCI.

In some embodiments, a code point of the first information field is used for indicating one or more transmission parameter sets.

In some specific embodiments, the code point of the first information field is used for indicating one transmission parameter set, which corresponds to Embodiment 2-1.

In some other specific embodiments, the code point of the first information field is used for indicating n transmission parameter sets, which corresponds to Embodiment 2-2.

In some embodiments, correspondences exist between the code points of the first information field and transmission parameter sets. The correspondences may be indicated in the MAC CE.

For example, each code point of the first information field corresponds to one transmission parameter set among k transmission parameter sets activated by the MAC CE.

As another example, each code point of the first information field corresponds to n transmission parameter sets among k transmission parameter sets activated by the MAC CE.

Optionally, for an uplink transmission of a single TRP/panel, each code point of the first information field corresponds to one transmission parameter set among k transmission parameter sets activated by the MAC CE.

Optionally, for uplink transmissions of multiple TRPs/panels scheduled by multiple DCIs, each code point of the first information field corresponds to one transmission parameter set or n transmission parameter sets among k transmission parameter sets activated by the MAC CE.

Optionally, for uplink transmissions of multiple TRPs/panels scheduled by single DCI, each code point of the first information field corresponds to n transmission parameter sets among k transmission parameter sets activated by the MAC CE.

In some embodiments, the first information field includes q bits, with a total of 2^{q} code points, each code point may correspond to one transmission parameter set or two transmission parameter sets among the k transmission parameter sets activated by the MAC CE, and q is a positive integer.

In some embodiments, the MAC CE is further used for indicating the number n of transmission parameter sets, corresponding to each code point of the first information field of the DCI, among the k transmission parameter sets activated by the MAC CE.

For example, the MAC CE further includes an indication field, which is used for indicating the number n of transmission parameter sets, corresponding to each code point of the first information field of the DCI, among the k transmission parameter sets activated by the MAC CE.

In a specific embodiment, the indication field may be used for indicating whether each code point of the first information field corresponds to one or two transmission parameter sets among the k transmission parameter sets activated by the MAC CE.

The structural design of the MAC CE in Embodiment 2 will be described below with reference to specific embodiments.

In some embodiments, the MAC CE may be used for indicating the following:
activated k SRS resource set indexes;
one group of transmission parameters associated with each SRS resource set index, for example, including one or more of a maximum number of transmission layers, a maximum number of transmission layers, an SRS resource index, a number of SRS resources, or a maximum number of SRS ports; and
a correspondence between each code point of the multiple code points of the first information field and the SRS resource set index (i.e., the transmission parameter set).

In a specific embodiment, the MAC CE is used for indicating one or more of the following information:
the correspondence between each code point of the multiple code points of the first information field and the SRS resource set index; or
a maximum number of transmission layers corresponding to the SRS resource set index.

As a specific example (referred to as Example 7), the MAC CE includes the following information:
a serving cell ID, a BWP ID, a first SRS resource set index corresponding to a first code point, a maximum number of transmission layers corresponding to the first SRS resource set index, a third SRS resource set index corresponding to a second code point, a maximum number of transmission layers corresponding to the third SRS resource set index, ..., a 2^{q+1}- 1-th SRS resource set index corresponding to a 2^{q}-th code point, a maximum number of transmission layers corresponding to the 2^{q+1}-1 -th SRS resource set index, and reserved bits.

In Example 7, it can be considered that the first SRS resource set index and the maximum number of transmission layers corresponding to the first SRS resource set index constitute one transmission parameter set, the third SRS resource set index and the maximum number of transmission layers corresponding to the third SRS resource set index constitute one transmission parameter set, ..., the 2^{q+1}-1-th SRS resource set index and the maximum number of transmission layers corresponding to the 2^{q+1}-1-th SRS resource set index constitute one transmission parameter set, and one code point corresponds to one transmission parameter set.

In Example 7, SRS resource set indexes corresponding to different code points may be the same, or may be different.

That is, resource set index values of the first SRS resource set index, the third SRS resource set index, ..., and the 2^{q+1}-1-th SRS resource set index may be the same or different. For example, the first SRS resource set index is an SRS resource set with index i, and the third SRS resource set index may be an SRS resource set with index i or an SRS resource set with index j.

As another specific example (referred to as Example 8), the MAC CE includes the following information:
a serving cell ID, a BWP ID, a first SRS resource set index corresponding to a first code point, a maximum number of transmission layers corresponding to the first SRS resource set index, a second SRS resource set index corresponding to the first code point, a maximum number of transmission layers corresponding to the second SRS resource set index, a third SRS resource set index corresponding to a second code point, a maximum number of transmission layers corresponding to the third SRS resource set index, a fourth SRS resource set index corresponding to the second code point, a maximum number of transmission layers corresponding to the fourth SRS resource set index, ..., a 2^{q+1}-1-th SRS resource set index corresponding to a 2^{q}-th code point, a maximum number of transmission layers corresponding to the 2^{q+1}-1-th SRS resource set index, a 2^{q+1}-th SRS resource set index corresponding to the 2^{q}-th code point, a maximum number of transmission layers corresponding to the 2^{q+1}-th SRS resource set index, and reserved bits.

In Example 8, it can be considered that the first SRS resource set index and the maximum number of transmission layers corresponding to the first SRS resource set index constitute one transmission parameter set, the second SRS resource set index and the maximum number of transmission layers corresponding to the second SRS resource set index constitute one transmission parameter set, the third SRS resource set index and the maximum number of transmission layers corresponding to the third SRS resource set index constitute one transmission parameter set, ..., the 2^{q+1}-1-th SRS resource set index and the maximum number of transmission layers corresponding to the 2^{q+1}-1-th SRS resource set index constitute one transmission parameter set, the 2^{q+1}-th SRS resource set index and the maximum number of transmission layers corresponding to the 2^{q+1}-th SRS resource set index constitute one transmission parameter set, and one code point corresponds to two transmission parameter sets which are used for different uplink transmissions respectively.

In Example 8, two SRS resource set indexes corresponding to a same code point are different.

That is, the first SRS resource set index is different from the second SRS resource set index, the third SRS resource set index is different from the fourth SRS resource set index, ..., and the 2^{q+1}-1-th SRS resource set index is different from the 2^{q+1}-th SRS resource set index.

In Example 8, first ones of SRS resource set indexes corresponding to different code points may be the same or different, and second ones of SRS resource set indexes corresponding to different code points may be the same or different.

That is, resource set index values of the first SRS resource set index, the third SRS resource set index, ..., and the 2^{q+1}-1-th SRS resource set index may be the same or different. For example, the first SRS resource set index is an SRS resource set with index i, and the third SRS resource set index may be an SRS resource set with index i or an SRS resource set with index j.

Resource set index values of the second SRS resource set index, the fourth SRS resource set index, ..., and the 2^{q+1}-th SRS resource set index may be the same or different. For example, the second SRS resource set index is an SRS resource set with index i, and the fourth SRS resource set index may be an SRS resource set with index i or an SRS resource set with index j.

Optionally, in some embodiments, the MAC CE may further include an indication bit used for indicating whether each code point of the first information field corresponds to one or two transmission parameter sets of the k SRS resource set indexes activated by the MAC CE.

Considering an example in which q is equal to 2 (q = 2) bits, association relationships between the code points of the first information field and transmission parameter sets are as follows:
codepoint 00: indicating a first group of transmission parameter sets associated with uplink transmission;
codepoint 01: indicating a second group of transmission parameter set associated with uplink transmission;
codepoint 10: indicating a third group of transmission parameter set associated with uplink transmission; and
codepoint 11: indicating a fourth group of transmission parameter set associated with uplink transmission.

In some embodiments, the number of transmission parameter sets included in one group of transmission parameter sets may be determined by the indication field.

For example, in Example 7, one group of transmission parameter sets includes one transmission parameter set; and in Example 8, one group of transmission parameter sets includes two transmission parameter sets.

In some embodiments, for uplink transmissions of multiple TRPs/panels scheduled by multiple DCIs, for example, the multiple DCIs include first DCI and second DCI, the first DCI is associated with a first CORSET group index, the second DCI is associated with a second CORSET group index, the first DCI is used for scheduling a first uplink transmission, and the second DCI is used for scheduling a second uplink transmission.

In this case, a transmission parameter set may have the following three updating manners.

Manner 1: a transmission parameter set indicated by the first DCI is only used for the uplink transmission scheduled by the first DCI, that is, the transmission parameter set indicated by the first DCI associated with the first CORSET group index is only used for an uplink transmission associated with the first CORSET group index.

Manner 2: the transmission parameter set indicated by the first DCI is used for the uplink transmissions scheduled by the multiple DCIs (including the first DCI and the second DCI); or, the transmission parameter set indicated by the first DCI associated with the first CORSET group index is used for the uplink transmission associated with the first CORSET group index and an uplink transmission associated with the second CORSET group index.

Manner 3: the transmission parameter set indicated by the first DCI is used for the uplink transmission scheduled by the second DCI; or, the transmission parameter set indicated by the first DCI associated with the first CORSET group index is used for the uplink transmission associated with the second CORSET group index.

For Manner 1, one code point of the first information field in the first DCI corresponds to one transmission parameter set, for example, it corresponds to one SRS resource set index and one associated group of transmission parameters. Accordingly, the MAC CE may use the structure in Example 7.

For Manner 2, one code point of the first information field in the first DCI corresponds to multiple transmission parameter sets (e.g., the n transmission parameter sets used for the n uplink transmissions), for example, it corresponds to 2 SRS resource set indexes and a group of transmission parameters associated with each SRS resource set index. Accordingly, the MAC CE may use the structure in Example 8.

For Manner 3, one code point of the first information field in the first DCI corresponds to one transmission parameter set, for example, it corresponds to one SRS resource set index and one associated group of transmission parameters. Accordingly, the MAC CE may use the structure in Example 7.

In some embodiments of the present disclosure, the method 200 further includes:
receiving, by the terminal device, first indication information from the network device, where the first indication information is used for indicating an updating manner of the transmission parameter set, for example, the above Manner 1, Manner 2 or Manner 3 for updating.

For example, the first indication information is used for indicating whether the transmission parameter set indicated by DCI associated with the first CORSET group index is used for the uplink transmission associated with the first CORESET group index, or the uplink transmission associated with the first CORSET group index and the uplink transmission associated with the second CORSET group index, or the uplink transmission associated with the second CORSET group index.

In some embodiments, the first indication information may be transmitted by RRC signaling or a MAC CE, or may be transmitted by DCI.

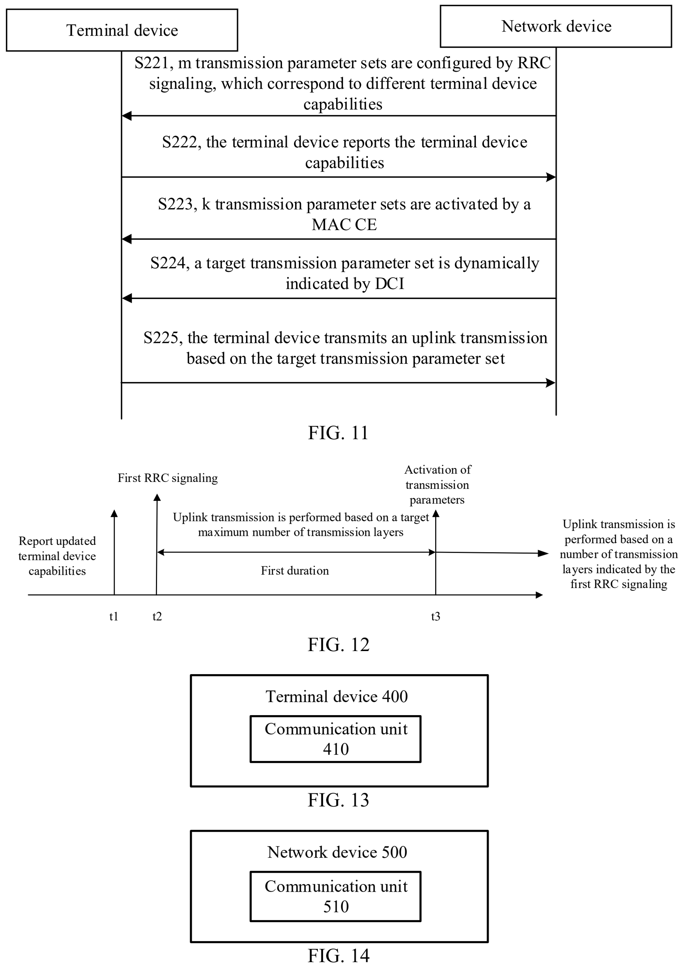

FIG. 11 is a schematic interactive diagram of an updating manner of a transmission parameter set based on Embodiment 2 provided in embodiments of the present disclosure. As illustrated in FIG. 11, the following steps may be included.

In S221, the network device configures m transmission parameter sets for the terminal device by RRC signaling, where the m transmission parameter sets correspond to different terminal device capabilities, and m is a positive integer greater than 2. For example, the multiple transmission parameter sets correspond to different antenna port capabilities.

In S222, the terminal device reports the terminal device capabilities.

In S223, the network device indicates activated k transmission parameter sets by a MAC CE, where k is less than or equal to m.

The MAC CE may further indicate correspondences between multiple code points and transmission parameter sets of the first information field of the DCI. For example, it may indicate that an SRS resource set index corresponds to each code point of the multiple code points and one group of transmission parameters associated with the SRS resource set index.

In S224, the network device indicates a transmission parameter set among the k transmission parameter sets by the DCI, that is, a target transmission parameter set used for a current uplink transmission.

For example, the network device may determine the target transmission parameter set based on the terminal device capabilities of a device.

In some specific embodiments, for an uplink transmission of a single TRP/panel, the network device may indicate a target transmission parameter set for the uplink transmission by DCI that schedules the uplink transmission; for example, the network indicates one transmission parameter set for the uplink transmission by a code point of the first information field in the DCI. Correspondingly, the terminal device may determine, based on the code point of the first information field of the DCI, the one transmission parameter set, e.g., one SRS resource set index and associated transmission parameters.

In some other specific embodiments, for uplink transmissions of multiple TRPs/panels scheduled by multiple DCIs, the network device may indicate transmission parameter sets used for the uplink transmissions scheduled by the multiple DCIs that schedule the multiple uplink transmissions; for example, the network indicates one transmission parameter set used for an uplink transmission scheduled by DCI by a code point of the first information field in the DCI. In this case, the MAC CE may use the structural design in Example 7. Alternatively, the network device may indicate transmission parameter sets corresponding to the multiple uplink transmissions by one of the multiple DCIs. In this case, the MAC CE may use the structural design in Example 8.

In yet some other specific embodiments, for uplink transmissions of multiple TRPs/panels scheduled by single DCI, the network device may indicate a target transmission parameter set for each of the multiple uplink transmissions by the single DCI; for example, the network device indicates multiple transmission parameter sets by code points of the first information field in the DCI, and the multiple uplink transmissions are used for the multiple uplink transmissions scheduled by the DCI. In this case, the MAC CE may use the structural design in Example 8.

In S225, the terminal device transmits an uplink transmission based on an updated transmission parameter set.

Therefore, in Embodiment 2, the network device indicates the target transmission parameter set by the DCI, which enables the network device to dynamically activate or update the transmission parameter set used for uplink transmission based on the terminal device capabilities. Thus, the activated or updated transmission parameter set is more matched with the reported terminal device capabilities, which improves the reliability of uplink transmission.

Embodiment 3: the n transmission parameter sets are configured by first RRC signaling.

For example, for an uplink transmission of a single TRP/panel, the first RRC signaling may include a transmission parameter set for the uplink transmission.

As another example, for uplink transmission of multiple TRPs/panels, the first RRC signaling may include transmission parameter sets for the multiple uplink transmissions.

In some embodiments, the method 200 further includes:
during a first duration between receiption of the first RRC signaling and activation of a transmission parameter set indicated by the first RRC signaling, transmitting, by the terminal device, an uplink transmission based on a target maximum number of transmission layers, where the target maximum number of transmission layers is a smaller value of a maximum number of supported transmission layers reported by the terminal device and a maximum number of transmission layers configured by second RRC signaling, and the second RRC signaling is RRC signaling that the network device previously configured a transmission parameter set.

For example, as illustrated in FIG. 12, the terminal device reports the updated terminal device capabilities to the network device at time t1, and receives the first RRC signaling from the network device at time t2. The first RRC signaling carries an updated transmission parameter set. Since activation of the transmission parameters configured by the RRC signaling requires a certain amount of time, the transmission parameters are activated at time t3. During a period of time between t2 and t3, uplink transmission is performed based on the smaller value of the maximum number of transmission layers currently supported by the terminal device and the maximum number of transmission layers previously configured by the network device, which is conducive to avoiding the problem of mismatch between the terminal device capabilities and the configuration by RRC, and ensuring the reliability of uplink transmission.

In summary, in the embodiments of the present disclosure, the terminal device may report the supported terminal device capabilities for the n uplink transmissions to the network device. For example, in a case where the terminal device capabilities used for the n uplink transmissions of the terminal device change, specifically, in a case where the terminal device dynamically switches the panel used for transmitting uplink transmissions or the panel used for receiving downlink transmissions, resulting in a change in the terminal device capabilities, the terminal device may report the terminal device capabilities to the network device. Furthermore, the network device indicates the n transmission parameter sets for the n uplink transmissions, where the n transmission parameter sets are in one-to-one correspondence with the n uplink transmissions, that is, the network device may configure a corresponding transmission parameter set for each uplink transmission, which improves the flexibility of panel switching in a case where panels with asymmetric capabilities are deployed on the terminal device side. In addition, by configuring a corresponding transmission parameter set for each uplink transmission, it is conducive to ensuring the performance of each uplink transmission of the n uplink transmissions.

The method embodiments of the present disclosure are described in detail above with reference to FIGS. 8 to 12. Device embodiments of the present disclosure will be described in detail below with reference to FIGS. 13 to 17. It should be understood that the device embodiments and the method embodiments correspond to each other, and as for similar descriptions of the device embodiments, reference can be made to the method embodiments.

FIG. 13 illustrates a schematic block diagram of a terminal device 400 according to the embodiments of the present disclosure. As illustrated in FIG. 13, the terminal device 400 includes:
a communication unit 410, configured to: report terminal device capabilities to a network device; and
receive n transmission parameter sets indicated by the network device, where the n transmission parameter sets are used for n uplink transmissions of the terminal device, n being a positive integer, and a transmission parameter set include a combination of one or more of the following parameters:
   a sounding reference signal (SRS) resource set index, an SRS resource index, a number of SRS resources, a maximum number of SRS ports, or a maximum number of transmission layers corresponding to the SRS resource set index.

In some embodiments, the n transmission parameter sets belong to m transmission parameter sets, the m transmission parameter sets are configured by radio resource control (RRC) signaling, m is a positive integer greater than 2, and n is less than or equal to m (n ≤ m).

In some embodiments, the n transmission parameter sets are indicated by a media access control control element (MAC CE).

In some embodiments, the n transmission parameter sets are indicated by n MAC CEs, and each MAC CE of the n MAC CEs is used for indicating one transmission parameter set among the n transmission parameter sets.

In some embodiments, the n uplink transmissions include one uplink transmission, or the n uplink transmissions include multiple uplink transmissions, and the n uplink transmissions are scheduled by multiple downlink control information (DCIs).

In some embodiments, the n transmission parameter sets are indicated by one MAC CE.

In some embodiments, the n uplink transmissions include multiple uplink transmissions, and the multiple uplink transmissions are scheduled by single DCI.

In some embodiments, the n transmission parameter sets are indicated by p MAC CEs, and n is greater than 2 (n > 2), p is greater than 1 (p > 1), and p is less than n (p < n).

In some embodiments, the n uplink transmissions include multiple uplink transmissions, and the multiple uplink transmissions are scheduled by multiple DCIs or by single DCI.

In some embodiments, the transmission parameter set includes the following parameters:
one SRS resource set index and the maximum number of transmission layers.

In some embodiments, the transmission parameter set includes the following parameters:
one SRS resource set index, the maximum number of transmission layers, and the maximum number of SRS ports.

In some embodiments, the transmission parameter set includes the following parameters:
one SRS resource set index, the maximum number of transmission layers, the SRS resource index, the number of SRS resources, and the maximum number of SRS ports.

In some embodiments, the MAC CE is further used for indicating a control resource set (CORESET) group index and/or a TCI state.

In some embodiments, the n transmission parameter sets belong to k transmission parameter sets, the k transmission parameter sets belong to m transmission parameter sets, the m transmission parameter sets are configured by RRC signaling, the k transmission parameter sets are activated by a MAC CE among the m transmission parameter sets, m is a positive integer greater than 2, k is less than or equal to m (k ≤ m), and n is less than or equal to k (n ≤ k).

In some embodiments, the n transmission parameter sets are indicated by DCI.

In some embodiments, the n transmission parameter sets are indicated by one DCI.

Alternatively, the n transmission parameter sets are indicated by n DCIs, and each DCI is used for indicating one transmission parameter set.

Alternatively, the n transmission parameter sets are indicated by q DCIs, n is greater than 2 (n > 2), q is greater than 1 (q > 1), and q is less than n.

In some embodiments, the DCI includes a first information field, the first information field is used for indicating x transmission parameter sets, and x is equal to 1 (x = 1), or x is equal to n (x = n), or x is greater than 1 and less than n (1 < x < n).

In some embodiments, code points of the first information field are used for indicating the x transmission parameter sets.

In some embodiments, correspondences exist between the code points of the first information field and transmission parameter sets, the correspondences are obtained from a MAC CE, and the MAC CE is used for activating k transmission parameter sets among m transmission parameter sets.

In some embodiments, the MAC CE is used for indicating one or more of the following information:
a correspondence between each code point of multiple code points of the first information field and an SRS resource set index; or
a maximum number of transmission layers corresponding to the SRS resource set index.

In some embodiments, the MAC CE is further used for indicating that each code point of the first information field of the DCI corresponds to a number of transmission parameter sets among the k transmission parameter sets activated by the MAC CE.

In some embodiments, in a case where the n uplink transmissions include one uplink transmission, each code point of the first information field corresponds to one transmission parameter set among the k transmission parameter sets activated by the MAC CE.

Alternatively, in a case where the n uplink transmissions include multiple uplink transmissions, each code point of the first information field corresponds to one transmission parameter set or n transmission parameter sets among the k transmission parameter sets activated by the MAC CE.

In some embodiments, the n uplink transmissions include multiple uplink transmissions, the multiple uplink transmissions are scheduled by multiple DCIs, the multiple DCIs include first DCI and second DCI, the first DCI is associated with a first CORSET group index, the second DCI is associated with a second CORSET group index, and the first CORSET group index is different from the second CORSET group index.

The first DCI is used for indicating one transmission parameter set, where the one transmission parameter set is used for an uplink transmission associated with the first CORESET group index, or the one transmission parameter set is used for an uplink transmission associated with the second CORESET group index.

Alternatively, the first DCI is used for indicating multiple transmission parameter sets, where the multiple transmission parameter sets are used for the uplink transmission associated with the first CORESET group index and the uplink transmission associated with the second CORESET group index.

In some embodiments, the communication unit 410 is further configured to:
receive first indication information from the network device, where the first indication information is used for indicating that a transmission parameter set indicated by DCI associated with the first CORSET group index is used for an uplink transmission associated with a target CORESET group index, and the target CORESET group index includes the first CORSET group index, or includes the first CORSET group index and the second CORSET group index, or includes the second CORSET group index.

In some embodiments, the first indication information is transmitted by one or more of the following signaling:
RRC signaling, a MAC CE, DCI.

In some embodiments, the n transmission parameter sets are configured by first RRC signaling.

In some embodiments, the communication unit 410 is further configured to:
during a first duration between reception of the first RRC signaling and activation of a transmission parameter set indicated by the first RRC signaling, transmit an uplink transmission based on a target maximum number of transmission layers, where the target maximum number of transmission layers is a smaller value of a maximum number of supported transmission layers reported by the terminal device and a maximum number of transmission layers configured by second RRC signaling, and the second RRC signaling is RRC signaling that the network device previously configured a transmission parameter set.

In some embodiments, the terminal device capabilities include:
antenna port capabilities supported by the terminal device for transmitting the n uplink transmissions.

Optionally, in some embodiments, the communication unit may be a communication interface or a transceiver, or an input/output interface of a communication chip or a system on chip.

It should be understood that the terminal device 400 according to the embodiments of the present disclosure may correspond to the terminal device in the method embodiments of the present disclosure, and other operations and/or functions of each unit in the terminal device 400 as mentioned above are respectively for implementing corresponding processes of the terminal device in the method 200 illustrated in FIGS. 8 to 12, which will not be repeated here for the sake of brevity.

FIG. 14 is a schematic block diagram of a network device according to embodiments of the present disclosure. The network device 500 in FIG. 14 includes:
a communication unit 510, configured to: receive terminal device capabilities reported by the terminal device; and
indicate n transmission parameter sets to the terminal device, where the n transmission parameter sets are used for n uplink transmissions of the terminal device, n being a positive integer, and a transmission parameter set includes a combination of one or more of the following parameters:
   a sounding reference signal (SRS) resource set index, an SRS resource index, a number of SRS resources, a maximum number of SRS ports, or a maximum number of transmission layers corresponding to the SRS resource set index.

In some embodiments, the n transmission parameter sets belong to m transmission parameter sets, and the m transmission parameter sets are configured by radio resource control (RRC) signaling, where m is a positive integer greater than 2, and n is less than or equal to m (n ≤ m).

In some embodiments, the n transmission parameter sets are indicated by a media access control control element (MAC CE).

In some embodiments, the n transmission parameter sets are indicated by n MAC CEs, and each MAC CE of the n MAC CEs is used for indicating one transmission parameter set among the n transmission parameter sets.

In some embodiments, the n uplink transmissions include one uplink transmission, or the n uplink transmissions include multiple uplink transmissions, and the n uplink transmissions are scheduled by multiple downlink control information (DCIs).

In some embodiments, the n transmission parameter sets are indicated by one MAC CE.

In some embodiments, the n uplink transmissions include multiple uplink transmissions, and the multiple uplink transmissions are scheduled by single DCI.

In some embodiments, the n transmission parameter sets are indicated by p MAC CEs, where n is greater than 2 (n > 2), p is greater than 1 (p> 1), and p is less than n (p < n).

In some embodiments, the n uplink transmissions include multiple uplink transmissions, and the multiple uplink transmissions are scheduled by multiple DCIs or by single DCI.

In some embodiments, the transmission parameter set includes the following parameters:
one SRS resource set index and the maximum number of transmission layers.

In some embodiments, the transmission parameter set includes the following parameters:
one SRS resource set index, the maximum number of transmission layers, and the maximum number of SRS ports.

In some embodiments, the transmission parameter set includes the following parameters:
one SRS resource set index, the maximum number of transmission layers, the SRS resource index, the number of SRS resources, and the maximum number of SRS ports.

In some embodiments, the MAC CE is further used for indicating a control resource set (CORESET) group index and/or a TCI state.

In some embodiments, the n transmission parameter sets belong to k transmission parameter sets, the k transmission parameter sets belong to m transmission parameter sets, the m transmission parameter sets are configured by RRC signaling, the k transmission parameter sets are activated by a MAC CE among the m transmission parameter sets, m is a positive integer greater than 2, k is less than or equal to m (k ≤ m), and n is less than or equal to k (n ≤ k).

In some embodiments, the n transmission parameter sets are indicated by DCI.

In some embodiments, the n transmission parameter sets are indicated by one piece of DCI.

Alternatively, the n transmission parameter sets are indicated by n DCIs, and each DCI is used for indicating one transmission parameter set.

Alternatively, the n transmission parameter sets are indicated by q DCIs, where n is greater than 2 (n > 2), q is greater than 1 (q > 1), and q is less than n.

In some embodiments, the DCI includes a first information field, where the first information field is used for indicating x transmission parameter sets, x is equal to 1 (x = 1), or x is equal to n (x = n), or x is greater than 1 and less than n (1 < x < n).

In some embodiments, code points of the first information field are used for indicating the x transmission parameter sets.

In some embodiments, correspondences exist between the code points of the first information field and transmission parameter sets, the correspondences are obtained from a MAC CE, and the MAC CE is used for activating k transmission parameter sets among m transmission parameter sets.

In some embodiments, the MAC CE is used for indicating one or more of following information:
a correspondence between each code point of multiple code points in the first information field and an SRS resource set index; or
a maximum number of transmission layers corresponding to the SRS resource set index.

In some embodiments, the MAC CE is further used for indicating that each code point of the first information field of the DCI corresponds to a number of transmission parameter sets among the k transmission parameter sets activated by the MAC CE.

In some embodiments, in a case where the n uplink transmissions include one uplink transmission, each code point of the first information field corresponds to one transmission parameter set among the k transmission parameter sets activated by the MAC CE.

Alternatively, in a case where the n uplink transmissions include multiple uplink transmissions, each code point of the first information field corresponds to one transmission parameter set or n transmission parameter sets among the k transmission parameter sets activated by the MAC CE.

In some embodiments, the n uplink transmissions include multiple uplink transmissions, the multiple uplink transmissions are scheduled by multiple DCIs, the multiple DCIs include first DCI and second DCI, the first DCI is associated with a first CORSET group index, the second DCI is associated with a second CORSET group index, and the first CORSET group index is different from the second CORSET group index.

The first DCI is used for indicating one transmission parameter set, where the one transmission parameter set is used for an uplink transmission associated with the first CORESET group index, or the one transmission parameter set is used for an uplink transmission associated with the second CORESET group index.

Alternatively, the first DCI is used for indicating multiple transmission parameter sets, where the multiple transmission parameter sets are used for the uplink transmission associated with the first CORESET group index and the uplink transmission associated with the second CORESET group index.

In some embodiments, the communication unit 510 is further configured to: transmit first indication information to the terminal device, where the first indication information is used for indicating that a transmission parameter set indicated by DCI associated with the first CORSET group index is used for an uplink transmission associated with a target CORESET group index, and the target CORESET group index includes the first CORSET group index, or includes the first CORSET group index and the second CORSET group index, or includes the second CORSET group index.

In some embodiments, the first indication information is transmitted by one or more of the following signaling: RRC signaling, a MAC CE, or DCI.

In some embodiments, the terminal device capabilities include: antenna port capabilities supported by the terminal device for transmitting the n uplink transmissions.

Optionally, in some embodiments, the communication unit may be a communication interface or a transceiver, or an input/output interface of a communication chip or a system on chip.

It should be understood that the network device 500 according to the embodiments of the present disclosure may correspond to the network device in the method embodiments of the present disclosure, and other operations and/or functions of each unit in the network device 500 as mentioned above are respectively for implementing corresponding processes of the network device in the method 200 illustrated in FIGS. 8 to 12, which will not be repeated here for the sake of brevity.

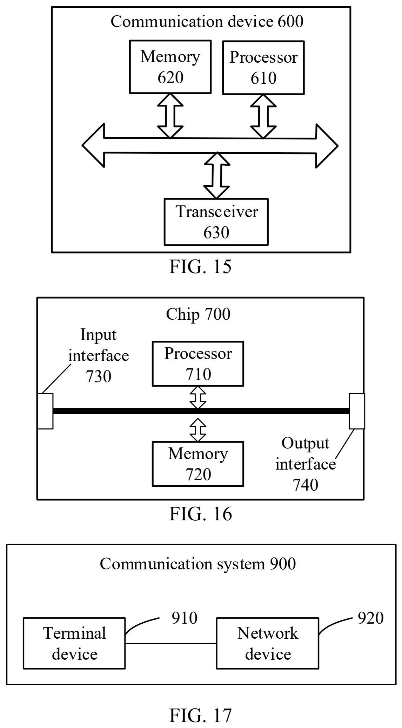

FIG. 15 is a schematic structural diagram of a communication device 600 provided in embodiments of the present disclosure. The communication device 600 illustrated in FIG. 15 includes a processor 610, and the processor 610 is capable of calling a computer program from a memory and running the computer program, to implement the method in the embodiments of the present disclosure.

Optionally, as illustrated in FIG. 15, the communication device 600 may further include a memory 620. The processor 610 is capable of calling and running a computer program from the memory 620 to implement the method in the embodiments of the present disclosure.

The memory 620 may be a separate device independent of the processor 610, or may be integrated into the processor 610.

Optionally, as illustrated in FIG. 15, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include antenna(s), and there may be one or more antennas.

Optionally, the communication device 600 may specifically be a network device in the embodiments of the present disclosure, and the communication device 600 may implement the corresponding processes implemented by the network device in each method in the embodiments of the present disclosure, which will not be repeated here for the sake of brevity.

Optionally, the communication device 600 may specifically be a mobile terminal/terminal device in the embodiments of the present disclosure, and the communication device 600 may implement the corresponding processes implemented by the mobile terminal/terminal device in each method in the embodiments of the present disclosure, which will not be repeated here for the sake of brevity.

FIG. 16 is a schematic structural diagram of a chip in embodiments of the present disclosure. The chip 700 illustrated in FIG. 16 includes a processor 710, and the processor 710 is capable of calling a computer program from a memory and running the computer program, to implement the method in the embodiments of the present disclosure.

Optionally, as illustrated in FIG. 16, the chip 700 may further include a memory 720. The processor 710 is capable of calling a computer program from the memory 720 and running the computer program, to implement the method in the embodiments of the present disclosure.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, to obtain information or data transmitted by other devices or chips.

Optionally, the chip 700 may further include an output interface 740. The processor 710 may control the output interface 740 to communicate with other devices or chips, and specifically, to output information or data to other devices or chips.

Optionally, the chip may be applied to a network device in the embodiments of the present disclosure, and the chip may implement the corresponding processes implemented by the network device in teach method of the embodiments of the present disclosure, which will not be repeated here for the sake of brevity.

Optionally, the chip may be applied to a mobile terminal/terminal device in the embodiments of the present disclosure, and the chip may implement the corresponding processes implemented by the mobile terminal/terminal device in each method in the embodiments of the present disclosure, which will not be repeated here for the sake of brevity.

It should be understood that the chip mentioned in the embodiments of the present disclosure may also be called a system on chip, a system chip, a chip system, or a system-on-chip chip, or the like.

FIG. 17 is a schematic block diagram of a communication system 900 provided in embodiments of the present disclosure. As illustrated in FIG. 17, the communication system 900 includes a terminal device 910 and a network device 920.

The terminal device 910 may be configured to implement corresponding functions implemented by the terminal device in the above method, and the network device 920 may be configured to implement corresponding functions implemented by the network device in the above method, which will not be repeated here for the sake of brevity.

It should be understood that the processor in the embodiments of the present disclosure may be an integrated circuit chip and have a capability of processing signals. In the implementation process, all steps in the above method embodiments can be implemented by an integrated logic circuit of hardware in the processor or instructions in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. All methods, steps and logical block diagrams disclosed in the embodiments of the present disclosure can be implemented or performed. The general-purpose processor may be a microprocessor, or the processor may be any conventional processor. The steps of the method disclosed in combination with the embodiments of the present disclosure may be directly embodied as being performed and implemented by a hardware decoding processor, or by using a combination of hardware and software modules in the decoding processor. The software module may be located in a mature storage medium in the art such as a random memory, a flash memory, a read-only memory, a programmable read-only memory or an electrically erasable programmable memory, a register. The storage medium is located in the memory, and the processor reads the information in the memory and implements the steps of the above methods in combination with its hardware.

It will be understood that the memory in the embodiments of the present disclosure may be a volatile memory or a non-volatile memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memories of the system and the method described herein are intended to include, but not limited to, these and any other suitable types of memories.

It should be understood that the above memory is exemplary but not limiting illustration, e.g., the memory in embodiments of the present disclosure may also be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. That is, the memory in the embodiments of the present disclosure is intended to include, but not limited to, these memories and any other suitable types of memories.

The embodiments of the present disclosure further provide a computer-readable storage medium for storing a computer program.

Optionally, the computer-readable storage medium may be applied to the network device in the embodiments of the present disclosure, and the computer program enables a computer to perform the corresponding processes implemented by the network device in each method in the embodiments of the present disclosure, which will not be repeated here for the sake of brevity.

Optionally, the computer-readable storage medium may be applied to the mobile terminal/terminal device in the embodiments of the present disclosure, and the computer program enables the computer to perform the corresponding processes implemented by the mobile terminal/terminal device in each method in the embodiments of the present disclosure, which will not be repeated here for the sake of brevity.

The embodiments of the present disclosure further provide a computer program product including computer program instructions.

Optionally, the computer program product may be applied to the network device in the embodiments of the present disclosure, and the computer program instructions enable a computer to perform the corresponding processes implemented by the network device in each method in the embodiments of the present disclosure, which will not be repeated here for the sake of brevity.

Optionally, the computer program product may be applied to the mobile terminal/terminal device in the embodiments of the present disclosure, and the computer program instructions enable the computer to perform the corresponding processes implemented by the mobile terminal/terminal device in each method in the embodiments of the present disclosure, which will not be repeated here for the sake of brevity.

The embodiments of the present disclosure further provide a computer program.

Optionally, the computer program may be applied to the network device in the embodiments of the present disclosure. The computer program, when executed on a computer, enables the computer to perform the corresponding processes implemented by the network device in each method in the embodiments of the present disclosure, which will not be repeated here for the sake of brevity.

Optionally, the computer program may be applied to the mobile terminal/terminal device in the embodiments of the present disclosure. The computer program, when executed on a computer, enables the computer to perform the corresponding processes implemented by the mobile terminal/terminal device in each method in the embodiments of the present disclosure, which will not be repeated here for the sake of brevity.

Those ordinary skilled in the art will realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

Those ordinary skilled in the art will clearly understand that, for convenience and brevity of the description, as for the specific working processes of the above-described system, apparatus and unit reference may be made to the corresponding processes in the above method embodiments, and details will not be repeated here.

In several embodiments provided in the present application, it will be understood that, the disclosed systems, apparatuses/devices, and methods may be implemented through other manners. For example, the apparatus embodiments described above are merely exemplary. For example, the division of the units is only a logical functional division. In an actual implementation, there may be other division manners. For example, a plurality of units or components may be combined or integrated into another system, or some features may be ignored or not executed. In addition, the mutual coupling or direct coupling or communicative connection shown or discussed may be an indirect coupling or communicative connection through some interfaces, apparatuses or units, and may be an electrical connection, a mechanical connection, or other forms of connections.

The units illustrated as separate components may be or may not be physically separated, and the components shown as units may be or may not be physical units. That is, they may be located in one place, or may be distributed onto a plurality of network units. Some or all of the units may be selected according to actual needs, to achieve the purposes of the solutions in the embodiments.

In addition, the functional units in the embodiments of the present application may be integrated into a single processing unit, or the units may be separate physical units, or two or more units may be integrated into a single unit.

If the described functions are implemented in the form of a software functional unit and sold or used as an independent product, they may be stored in a computer-readable storage medium. Based on this understanding, the technical solutions of the present application, in essence, or part of the technical solutions that contributes to the prior art, or part of the technical solutions, may be embodied in the form of a software product. The computer software product is stored in a storage medium, and includes several instructions to cause a computer device (which may be a personal computer, a server, or a network device, etc.) to perform all or part of the steps of the methods described in the various embodiments of the present application. The storage medium mentioned above includes various types of medium capable of storing program codes, such as a USB flash drive (U disk), a mobile hard disk, a read-only memory (ROM), a random access memory (RAM), a diskette, or an optical disk.

The foregoing descriptions are merely specific implementations of the present application, but the protection scope of the present application is not limited thereto. Any skilled person in the art could readily conceive of variations or replacements within the technical scope disclosed in the present application, which shall be all included in the protection scope of the present application. Therefore, the protection scope of the present application shall be subject to the protection scope of the claims.

## Claims

1. A wireless communication method, comprising:
reporting, by a terminal device, terminal device capabilities to a network device; and
receiving, by the terminal device, n transmission parameter sets indicated by the network device, wherein the n transmission parameter sets are used for n uplink transmissions of the terminal device, n being a positive integer, and a transmission parameter set comprises a combination of one or more of the following parameters:
a sounding reference signal (SRS) resource set index, an SRS resource index, a number of SRS resources, a maximum number of SRS ports, or a maximum number of transmission layers corresponding to the SRS resource set index.

2. The method according to claim 1, wherein the n transmission parameter sets belong to m transmission parameter sets, and the m transmission parameter sets are configured by radio resource control (RRC) signaling, wherein m is a positive integer greater than 2, and n is less than or equal to m (n ≤ m).

3. The method according to claim 1 or 2, wherein the n transmission parameter sets are indicated by a media access control control element (MAC CE).

4. The method according to claim 3, wherein the n transmission parameter sets are indicated by n MAC CEs, and each MAC CE of the n MAC CEs is used for indicating one transmission parameter set among the n transmission parameter sets.

5. The method according to claim 4, wherein the n uplink transmissions comprise one uplink transmission, or the n uplink transmissions comprise multiple uplink transmissions, and the n uplink transmissions are scheduled by multiple downlink control information (DCIs).

6. The method according to claim 3, wherein the n transmission parameter sets are indicated by one MAC CE.

7. The method according to claim 6, wherein the n uplink transmissions comprise multiple uplink transmissions, and the multiple uplink transmissions are scheduled by single DCI.

8. The method according to claim 3, wherein the n transmission parameter sets are indicated by p MAC CEs, where n is greater than 2 (n > 2), p is greater than 1 (p > 1), and p is less than n (p < n).

9. The method according to claim 8, wherein the n uplink transmissions comprise multiple uplink transmissions, and the multiple uplink transmissions comprise uplink transmissions scheduled by multiple DCIs and/or uplink transmissions scheduled by single DCI.

10. The method according to any one of claims 1 to 9, wherein the transmission parameter set comprises the following parameters:
one SRS resource set index and the maximum number of transmission layers.

11. The method according to any one of claims 1 to 9, wherein the transmission parameter set comprises the following parameters:
one SRS resource set index, the maximum number of transmission layers, and the maximum number of SRS ports.

12. The method according to any one of claims 1 to 9, wherein the transmission parameter set comprises the following parameters:
one SRS resource set index, the maximum number of transmission layers, the SRS resource index, the number of SRS resources, and the maximum number of SRS ports.

13. The method according to any one of claims 3 to 9, wherein the MAC CE is further used for indicating a control resource set (CORESET) group index and/or a transmission configuration indicator (TCI) state.

14. The method according to claim 1, wherein the n transmission parameter sets belong to k transmission parameter sets, the k transmission parameter sets belong to m transmission parameter sets, the m transmission parameter sets are configured by RRC signaling, and the k transmission parameter sets are activated by a MAC CE among the m transmission parameter sets, where m is a positive integer greater than 2, k is less than or equal to m (k ≤ m), and n is less than or equal to k (n ≤ k).

15. The method according to claim 1 or 14, wherein the n transmission parameter sets are indicated by DCI.

16. The method according to claim 15, wherein
the n transmission parameter sets are indicated by one DCI;
the n transmission parameter sets are indicated by n DCIs, and each DCI is used for indicating one transmission parameter set; or
the n transmission parameter sets are indicated by q DCIs, where n is greater than 2 (n > 2), q is greater than 1 (q > 1), and q is less than n.

17. The method according to claim 15 or 16, wherein the DCI comprises a first information field, and the first information field is used for indicating x transmission parameter sets, where x is equal to 1 (x = 1), or x is equal to n (x = n), or x is greater than 1 and less than n (1 < x < n).

18. The method according to claim 17, wherein code points of the first information field are used for indicating the x transmission parameter sets.

19. The method according to claim 18, wherein correspondences exist between the code points of the first information field and transmission parameter sets, the correspondences are obtained from a MAC CE, and the MAC CE is used for activating k transmission parameter sets among m transmission parameter sets.

20. The method according to claim 19, wherein the MAC CE is used for indicating one or more of the following information:
a correspondence between each code point of multiple code points of the first information field and an SRS resource set index; or
a maximum number of transmission layers corresponding to the SRS resource set index.

21. The method according to claim 19 or 20, wherein the MAC CE is further used for indicating that each code point of the first information field of the DCI corresponds to a number of transmission parameter sets among the k transmission parameter sets activated by the MAC CE.

22. The method according to any one of claims 19 to 21, wherein in a case where the n uplink transmissions comprise one uplink transmission, each code point of the first information field corresponds to one transmission parameter set among the k transmission parameter sets activated by the MAC CE; or
in a case where the n uplink transmissions comprise multiple uplink transmissions, each code point of the first information field corresponds to one transmission parameter set or n transmission parameter sets among the k transmission parameter sets activated by the MAC CE.

23. The method according to any one of claims 15 to 22, wherein the n uplink transmissions comprise multiple uplink transmissions, the multiple uplink transmissions are scheduled by multiple DCIs, the multiple DCIs comprise first DCI and second DCI, the first DCI is associated with a first CORSET group index, the second DCI is associated with a second CORSET group index, and the first CORSET group index is different from the second CORSET group index; and
the first DCI is used for indicating one transmission parameter set, wherein the one transmission parameter set is used for an uplink transmission associated with the first CORESET group index, or the one transmission parameter set is used for an uplink transmission associated with the second CORESET group index; or
the first DCI is used for indicating multiple transmission parameter sets, wherein the multiple transmission parameter sets are used for the uplink transmission associated with the first CORESET group index and the uplink transmission associated with the second CORESET group index.

24. The method according to claim 23, further comprising:
receiving, by the terminal device, first indication information from the network device, wherein the first indication information is used for indicating that a transmission parameter set indicated by DCI associated with the first CORSET group index is used for an uplink transmission associated with a target CORESET group index, wherein the target CORESET group index comprises the first CORSET group index, or comprises the first CORSET group index and the second CORSET group index, or comprises the second CORSET group index.

25. The method according to claim 24, wherein the first indication information is transmitted by one or more of the following signaling:
RRC signaling, a MAC CE, or DCI.

26. The method according to claim 1, wherein the n transmission parameter sets are configured by first RRC signaling.

27. The method according to claim 26, further comprising:
during a first duration between receiption of the first RRC signaling and activation of a transmission parameter set indicated by the first RRC signaling, transmitting, by the terminal device, an uplink transmission based on a target maximum number of transmission layers, wherein the target maximum number of transmission layers is a smaller value of a maximum number of supported transmission layers reported by the terminal device and a maximum number of transmission layers configured by second RRC signaling, and the second RRC signaling is RRC signaling that the network device previously configured a transmission parameter set.

28. The method according to any one of claims 1 to 27, wherein the terminal device capabilities comprise:
antenna port capabilities supported by the terminal device for transmitting the n uplink transmissions.

29. A wireless communication method, comprising:
receiving, by a network device, terminal device capabilities reported by a terminal device; and
indicating n transmission parameter sets to the terminal device, wherein the n transmission parameter sets are used for n uplink transmissions of the terminal device, n being a positive integer, and a transmission parameter set comprises a combination of one or more of the following parameters:
a sounding reference signal (SRS) resource set index, an SRS resource index, a number of SRS resources, a maximum number of SRS ports, or a maximum number of transmission layers corresponding to the SRS resource set index.

30. The method according to claim 29, wherein the n transmission parameter sets belong to m transmission parameter sets, and the m transmission parameter sets are configured by radio resource control (RRC) signaling, where m is a positive integer greater than 2, and n is less than or equal to m (n ≤ m).

31. The method according to claim 29 or 30, wherein the n transmission parameter sets are indicated by a media access control control element (MAC CE).

32. The method according to claim 31, wherein the n transmission parameter sets are indicated by n MAC CEs, and each MAC CE of the n MAC CEs is used for indicating one transmission parameter set among the n transmission parameter sets.

33. The method according to claim 32, wherein the n uplink transmissions comprise one uplink transmission, or the n uplink transmissions comprise multiple uplink transmissions, and the n uplink transmissions are scheduled by multiple downlink control information (DCIs).

34. The method according to claim 31, wherein the n transmission parameter sets are indicated by one MAC CE.

35. The method according to claim 34, wherein the n uplink transmissions comprise multiple uplink transmissions, and the multiple uplink transmissions are scheduled by single DCI.

36. The method according to claim 31, wherein the n transmission parameter sets are indicated by p MAC CEs, where n is greater than 2 (n > 2), p is greater than 1 (p > 1), and p is less than n (p < n).

37. The method according to claim 36, wherein the n uplink transmissions comprise multiple uplink transmissions, and the multiple uplink transmissions comprise uplink transmissions scheduled by multiple DCIs and/or uplink transmissions scheduled by single DCI.

38. The method according to any one of claims 29 to 37, wherein the transmission parameter set comprises the following parameters: one SRS resource set index and the maximum number of transmission layers.

39. The method according to any one of claims 29 to 37, wherein the transmission parameter set comprises the following parameters:
one SRS resource set index, the maximum number of transmission layers, and the maximum number of SRS ports.

40. The method according to any one of claims 29 to 37, wherein the transmission parameter set comprises the following parameters:
one SRS resource set index, the maximum number of transmission layers, the SRS resource index, the number of SRS resources, and the maximum number of SRS ports.

41. The method according to any one of claims 31 to 37, wherein the MAC CE is further used for indicating a control resource set (CORESET) group index and/or a transmission configuration indicator (TCI) state.

42. The method according to claim 29, wherein the n transmission parameter sets belong to k transmission parameter sets, the k transmission parameter sets belong to m transmission parameter sets, the m transmission parameter sets are configured by RRC signaling, and the k transmission parameter sets are activated by a MAC CE among the m transmission parameter sets, where m is a positive integer greater than 2, k is less than or equal to m (k ≤ m), and n is less than or equal to k (n ≤ k).

43. The method according to claim 29 or 42, wherein the n transmission parameter sets are indicated by DCI.

44. The method according to claim 43, wherein
the n transmission parameter sets are indicated by one DCI;
the n transmission parameter sets are indicated by n DCIs, and each DCI is used for indicating one transmission parameter set; or
the n transmission parameter sets are indicated by q DCIs, where n is greater than 2 (n > 2), q is greater than 1 (q > 1), and q is less than n.

45. The method according to claim 43 or 44, wherein the DCI comprises a first information field, and the first information field is used for indicating x transmission parameter sets, where x is equal to 1 (x = 1), or x is equal to n (x = n), or x is greater than 1 and less than n (1 < x < n).

46. The method according to claim 45, wherein code points of the first information field are used for indicating the x transmission parameter sets.

47. The method according to claim 46, wherein correspondences exist between the code points of the first information field and transmission parameter sets, the correspondences are obtained from a MAC CE, and the MAC CE is used for activating k transmission parameter sets among m transmission parameter sets.

48. The method according to claim 47, wherein the MAC CE is used for indicating one or more of the following information:
a correspondence between each code point of multiple code points of the first information field and an SRS resource set index; or
a maximum number of transmission layers corresponding to the SRS resource set index.

49. The method according to claim 47 or 48, wherein the MAC CE is further used for indicating that each code point of the first information field of the DCI corresponds to a number of transmission parameter sets among the k transmission parameter sets activated by the MAC CE.

50. The method according to any one of claims 47 to 49, wherein in a case where the n uplink transmissions comprise one uplink transmission, each code point of the first information field corresponds to one transmission parameter set among the k transmission parameter sets activated by the MAC CE; or
in a case where the n uplink transmissions comprise multiple uplink transmissions, each code point of the first information field corresponds to one transmission parameter set or n transmission parameter sets among the k transmission parameter sets activated by the MAC CE.

51. The method according to any one of claims 43 to 50, wherein the n uplink transmissions comprise multiple uplink transmissions, the multiple uplink transmissions are scheduled by multiple DCIs, the multiple DCIs comprise first DCI and second DCI, the first DCI is associated with a first CORSET group index, the second DCI is associated with a second CORSET group index, and the first CORSET group index is different from the second CORSET group index; and
the first DCI is used for indicating one transmission parameter set, wherein the one transmission parameter set is used for an uplink transmission associated with the first CORESET group index, or the one transmission parameter set is used for an uplink transmission associated with the second CORESET group index; or
the first DCI is used for indicating multiple transmission parameter sets, wherein the multiple transmission parameter sets are used for the uplink transmission associated with the first CORESET group index and the uplink transmission associated with the second CORESET group index.

52. The method according to claim 51, further comprising:
transmitting, by the network device, first indication information to the terminal device, wherein the first indication information is used for indicating that a transmission parameter set indicated by DCI associated with the first CORSET group index is used for an uplink transmission associated with a target CORESET group index, wherein the target CORESET group index comprises the first CORSET group index, or comprises the first CORSET group index and the second CORSET group index, or comprises the second CORSET group index.

53. The method according to claim 52, wherein the first indication information is transmitted by one or more of the following signaling: RRC signaling, a MAC CE, or DCI.

54. The method according to any one of claims 29 to 53, wherein the terminal device capabilities comprise: antenna port capabilities supported by the terminal device for transmitting the n uplink transmissions.

55. A terminal device, comprising:
a communication unit, configured to: report terminal device capabilities to a network device; and
receive n transmission parameter sets indicated by the network device, wherein the n transmission parameter sets are used for n uplink transmissions of the terminal device, n being a positive integer, and a transmission parameter set comprises a combination of one or more of the following parameters:
a sounding reference signal (SRS) resource set index, an SRS resource index, a number of SRS resources, a maximum number of SRS ports, or a maximum number of transmission layers corresponding to the SRS resource set index.

56. A network device, comprising:
a communication unit, configured to: receive terminal device capabilities reported by a terminal device; and
indicate n transmission parameter sets to the terminal device, wherein the n transmission parameter sets are used for n uplink transmissions of the terminal device, n being a positive integer, and a transmission parameter set comprises a combination of one or more of the following parameters:
a sounding reference signal (SRS) resource set index, an SRS resource index, a number of SRS resources, a maximum number of SRS ports, or a maximum number of transmission layers corresponding to the SRS resource set index.

57. A terminal device, comprising: a processor and a memory, wherein the memory is configured to store a computer program, and the processor is configured to call the computer program stored in the memory and run the computer program, to perform the method according to any one of claims 1 to 28.

58. A network device, comprising: a processor and a memory, wherein the memory is configured to store a computer program, and the processor is configured to call the computer program stored in the memory and run the computer program, to perform the method according to any one of claims 29 to 54.

59. A chip, comprising: a processor configured to call a computer program from a memory and run the computer program, to enable a device equipped with the chip to perform the method according to any one of claims 1 to 28, or the method according to any one of claims 29 to 54.

60. A computer-readable storage medium, configured to store a computer program, wherein the computer program enables a computer to perform the method according to any one of claims 1 to 28, or the method according to any one of claims 29 to 54.

61. A computer program product, comprising computer program instructions, wherein the computer program instructions enable a computer to perform the method according to any one of claims 1 to 28, or the method according to any one of claims 29 to 54.

62. A computer program, wherein the computer program enables a computer to perform the method according to any one of claims 1 to 28, or the method according to any one of claims 29 to 54.
